# EUROPEAN PATENT SPECIFICATION

(11) **EP 3 976 558 B1**
(45) Date of publication and mention of the grant of the patent: **04.12.2024**
(21) Application number: 20814126.7
(22) Date of filing: 27.05.2020
(51) Int. Cl.: C05F 7/00, C05B 11/00, C01C 1/24, C05B 7/00, C05B 9/00, C01B 25/222, C01C 1/242, C01F 5/24, C02F 1/52

(54) **CHEMICAL PROCESSING OF STRUVITE**
CHEMISCHE VERARBEITUNG VON STRUVIT
TRAITEMENT CHIMIQUE DE STRUVITE

(30) Priority: 28.05.2019 SE 1950636
(43) Date of publication of application: 06.04.2022
(73) Proprietor: EasyMining Sweden AB, 191 29 Sollentuna (SE)
(72) Inventor: COHEN, Yariv, 752 31 Uppsala (SE); ENFÄLT, Patrik, 757 52 Uppsala (SE); SVÄRD, John, 435 43 Pixbo (SE); HÖGBERG, Carl-Johan, 756 54 Uppsala (SE)
(74) Representative: AWA Sweden AB
(86) International application number: PCT/SE2020/050533
(87) International publication number: WO 2020/242366

(56) References cited:
- EP-A1- 2 904 892
- WO-A1-2013/133703
- CA-A- 257 803
- SE-A1- 1 751 571
- US-A1- 2018 297 846
- SHARMEEN FARHANA: "Thermal decomposition of struvite : a novel approach to recover ammonia from wastewater using struvite decomposition products", 1 January 2015 (2015-01-01), Vancouver, Canada, pages 1 - 243, XP055413667, Retrieved from the Internet <URL:https://open.library.ubc.ca/cIRcle/collections/ubctheses/24/items/1.0166439> [retrieved on 20171009], DOI: 10.14288/1.0166439

## Description

### TECHNICAL FIELD

The present technology relates in general to methods and arrangements for chemically processing of struvite, and in particular to methods and arrangements for decomposing struvite for recovery of at least ammonia from the struvite molecule itself.

### BACKGROUND

Nitrogen is essential to life and is among the nutrients consumed in the largest quantities by all organisms. Ammonia is synthesized at a massive scale by the fertilizer industry. Approximately 100 Mt of reactive nitrogen is synthesized annually worldwide using the Haber-Bosch process. This anthropogenic ammonia production is in similar magnitude to natural nitrogen fixation, which is estimated to about 150 to 200 Mt nitrogen per year on earth.

Humans and animals excrete a significant fraction of the nutrients contained in the food they ingest. Alongside other agricultural sources, these nutrients find their way back into the environment as municipal wastewater effluents, landfill leachate from disposed organic matter, agro food processing effluents, etc. Anthropogenic loading of nutrients is the main cause for eutrophication of receiving water bodies. Therefore, wastewater treatment plants are needed for treating nutrient rich effluents.

Both processes of synthesizing ammonia and removing it from wastewater are energy and resource intensive. In the Haber-Bosch process, ammonia is synthesized by combining atmospheric nitrogen with hydrogen gas at a temperature and pressure of approximately 450° C and 30 MPa respectively. The ammonia production industry relies heavily on natural gas as a non- renewable precursor for hydrogen and energy. Ammonia synthesis is considered to be responsible for about 5% of the world's natural gas consumption. It is estimated that global ammonia production accounts for 1.3% of the world's fossil fuel-derived energy use, contributing considerable to greenhouse gas emissions.

In typical environmental conditions the majority of nitrogen in wastewaters exists as dissolved ammonium ions. To achieve nitrogen discharge goals, wastewater treatment plants employ biological nitrogen removal processes, such as nitrification, which is commonly followed by denitrification to ultimately convert ammonia to atmospheric nitrogen.

Biological processes for nitrogen removal are costly and complex. The operating bacteria in such processes are sensitive to a wide range of toxic compounds. Effluents with high salinity cannot be processed. In addition, the performance of biological treatment is very temperature dependent with low efficiency at cold climates. The operational bacteria require long retention times which means large basins. Furthermore, the process is also energy intensive requiring massive aeration to oxidize all ammonium to nitrate. In order to obtain an efficient conversion of nitrate to nitrogen gas by de-nitrification an expensive source of carbon such as methanol is usually needed. The process also generates considerable amounts of climate gases in form of nitrous oxides. And in the end, the reactive nitrogen is destroyed and converted back to atmospheric nitrogen which need to be recovered again by the resource intensive Haber-Bosch process.

The existing technologies for nitrogen removal from effluents are costly and complex. Beside biological treatment, the alternatives are: a) ammonia stripping - require high temperature and/or high pH, high capital and operational costs for treating streams with relatively low ammonium content, b) ammonia adsorption - e.g. adsorption on zeolite requires chemicals for regeneration, high capital and operational costs and difficult to recover ammonia and c) break point chlorination - high operational costs due to required chemicals, nitrogen is lost and not recovered.

A logical conclusion is that nitrogen-containing effluents should be viewed as a nitrogen resource instead of a waste and nitrogen-containing effluents should be exploited through the recovery of nitrogen in forms that could be employed by agriculture or other industries. In Sweden, an environmental goal for recovery of nitrogen from domestic wastewater is being proposed.

Phosphorus is also an important element essential to life. The release of phosphorous to surface waters, and its consequent contribution to eutrophication, has also led to increasing concerns about water quality. Policies were therefore implemented throughout the world, to reduce the levels of phosphorus entering surface waters, by the implementation of technologies to remove phosphorus from domestic and industrial wastewater. In contrast to nitrogen, mineral phosphorus resources are considered limited and finite. In addition, most of the world's phosphorus reserves are controlled by only few countries. Therefore, there is an increasing interest for recycling and beneficial re-use of the phosphorus present in wastes. Several countries have recently introduced a mandatory requirement for recovery of phosphorus from municipal wastewater.

Potassium is also a nutrient consumed in large quantities by all organisms. Similar to phosphorus, potassium is also extracted from limited rock deposits of minerals or from salt lakes. The potassium reserves in the world are also controlled by only a few countries. Recovery of potassium is still not discussed much in society due to that it is not contributing to eutrophication like nitrogen and phosphorus since it is not a limiting nutrient in aquatic environments. In addition, there are no viable technologies today for recovery of potassium from dilute effluents.

Precipitation of struvite from wastewater has been used for producing struvite as a fertilizer. Struvite is a crystal, which is formed with equal molar concentrations of magnesium, ammonium and phosphate combined with six water molecules (MgNH₄PO₄·6H₂O). Its molecular weight is 245.43 g per mole, and it is sparingly soluble under neutral and alkaline conditions but readily soluble in acid. The ammonium ion in the struvite crystal lattice can be exchanged with other alkali ions such as potassium or sodium. Hence, there are two additional forms of struvite: a) potassium-struvite (MgKPO₄·6H₂O) with a molecular weight of 266.46 g per mole, and b) sodium struvite (MgNaPO₄·6H₂O) with a molecular weight of 250.36 g per mole.

Struvite can easily be precipitated from wastewater if the magnesium to other nutrient ratio (N+P, or K+P) is sufficient and the pH is adjusted to neutral or alkaline levels. Struvite precipitation from wastewaters is readily applied in practice in prior art. The applications of struvite precipitation have so far been mainly focused on recovery of phosphorus. Most wastewaters contain sufficient ammonium for phosphorus removal as struvite and the only addition required for struvite precipitation is typically a magnesium source.

Ammonium nitrogen is normally present in effluents at much higher concentrations compared to phosphorus. In order to remove nitrogen in form of struvite from wastewater, large amounts of external phosphorus and magnesium are needed. However, it is impractical to convert high quality sources of phosphorus to struvite just in order to recover ammonium-nitrogen. Such a process would also not be economically viable since the commercial value of struvite is low.

Struvite has been reported in the literature to be precipitated from many different types of wastewaters. Possible applications include: swine wastewater, calf manure wastewater, leather tanning wastewater, sewage treatment side-streams, dairy wastewater, sewage sludge digester slurry, digester supernatant, industrial wastewater, landfill leachate, lagoon wastewater, poultry manure wastewater, agro-industrial wastes, slaughterhouse wastewater, biogas digester effluents, animal manure, food processing effluents, source separated urine, and fertilizer plant wastewater.

State-of-the-art struvite precipitation is focused on phosphorus removal. This is usually done by addition of magnesium in form of magnesium chloride and sodium hydroxide for pH adjustment or alternatively addition of magnesium hydroxide which provides both a source of magnesium and hydroxyl ions for pH adjustment. There are generally two reasons for recovering struvite from domestic wastewater, the first is to solve struvite scaling problems in the wastewater treatment plant. The second reason is to enable recovery of phosphorus, which is a limited resource.

Precipitation of struvite is usually performed in a special crystallizer which enables to form struvite pellets of specific size range that can be spread on arable land using conventional spreading equipment. The precipitated struvite is thereafter commonly used as a slow release phosphorus fertilizer. To produce struvite pellets is a complicated task. The process requires a long solid retention time of between 8 to 50 days whereas the typical hydraulic retention time is below 10 min. In order to keep the pellets fluidized in the reactor, recycled flow relative to the inflow of up to ca 25% is needed. The installation is complex and costly. It is clear that if pellets are not required struvite can be precipitated in a simple reactor with a short reaction time followed by simple solid liquid separation such as filtration and/or sedimentation.

The main idea behind state-of-the-art precipitation of struvite is to use it as a fertilizer. However, struvite is not an optimal fertilizer. Struvite contains too much magnesium in relation to nitrogen, phosphorus or potassium. For example, according to the Food and Agriculture Organization of the United Nations, the nutrient requirements for a potato crop is 1:78:5:36 in molar ratio of Mg:N:P:K. The nutrient requirement for winter wheat is 1 :18:1:7 in molar ratio of Mg:N:P:K. The actual fertilizer requirements depend on the type of crop and the ability of the soil to deliver for example magnesium or potassium by release from clay or soil minerals. A major problem with struvite as a fertilizer is also that it is not water-soluble. This means that the nutrients in struvite are not readily plant available. Therefore, struvite cannot be used as a main fertilizer but can only be used as a supplemental slow release fertilizer for niche applications. It has been recently shown that the plant availability of struvite is being suppressed by a high magnesium content in the soil. This can further limit large scale application of struvite as a fertilizer. Due to the above described reasons the fertilizer value, as well as, economic value of struvite is generally low.

Sharmeen Farhana: "Thermal decomposition of struvite : a novel approach to recover ammonia from wastewater using struvite decomposition products"" 1 January 2015 (2015-01-01), pages 1-243, Vancouver, Canada DOI:10.14288/1.0166439 discloses wet and thermal processes for decomposing struvite. Struvite is decomposed under alkali or acid conditions whereby magnesium phosphate is obtained.

There is a need for a method and arrangements that can enable to recover simultaneously all major plant nutrients from wastewater: phosphorus, nitrogen and possibly potassium.

### SUMMARY

A general object is to provide methods and arrangements that enables recovering of major plant nutrients from wastewater.

The above object is achieved by methods and devices according to the independent claims. Preferred embodiments are defined in dependent claims.

In general words, in a first aspect, a method for decomposing struvite comprises dissolving, in sulphuric acid, of a feed material comprising struvite, thereby forming a solution. Phosphate ions are removed from the solution. Magnesium compounds are precipitated from the solution, after the removing of phosphate ions. This precipitation of magnesium compounds is caused by increasing a pH of the solution. By the precipitation of magnesium compounds a solution comprising ammonium sulphate is formed.

In a second aspect, a method for recovering at least one of nitrogen, phosphorus and potassium from waste material comprises precipitating of struvite from an initial liquid of waste material, by adding a magnesium source to the initial liquid of waste material and adjusting a pH of the initial liquid of waste material to an alkaline pH. The precipitated struvite is separated from the initial liquid of waste material. The separated struvite is then decomposed by a method according to the first aspect.

In a third aspect, an arrangement for decomposing struvite comprises a dissolving reactor, configured for mixing struvite and sulphuric acid for causing dissolution of the struvite. The dissolving reactor has a feed input for entering feed material comprising struvite, an acid input for entering sulphuric acid, and an output for a solution comprising dissolved struvite. The arrangement for decomposing struvite further comprises a phosphate ion removing section, configured for extracting phosphate ions from the solution. The phosphate ion removing section has an input for entering the solution comprising dissolved struvite. The input for entering the solution comprising dissolved struvite is connected to the output for a solution comprising dissolved struvite of the dissolving reactor. The phosphate ion removing section has also an output for a liquid comprising extracted phosphate ions, and an output for the solution after phosphate ion extraction. The arrangement for decomposing struvite further comprises a precipitator vessel, configured for precipitating magnesium compounds from the solution by increasing a pH of the solution. The precipitator vessel has a separation arrangement for separating the precipitated magnesium compounds from the solution. The precipitator vessel has an input for the solution, directly or indirectly connected to the output for the solution after phosphate ion extraction of the phosphate ion removing section. The precipitator vessel also has an input for pH regulating substances, an output for the precipitated magnesium compounds and an output for a solution comprising ammonium sulphate. The arrangement for decomposing struvite further comprises a crystallizer configured for dehydrating said solution comprising ammonium sulphate causing crystallization of ammonium sulphate, said crystallizer has an input for said solution comprising ammonium sulphate connected to said output for said solution comprising ammonium sulphate of said precipitator vessel and an output for crystallized ammonium sulphate.

In a fourth aspect, an arrangement for recovering at least one of nitrogen, phosphorus and potassium from waste material comprises a struvite precipitator. The struvite precipitator has an input for an initial liquid of waste material, and an input for magnesium compounds. The struvite precipitator is arranged for mixing the initial liquid and the magnesium compounds, and for adjusting a pH of the initial liquid of waste material to an alkaline pH. Thereby, struvite precipitates. The struvite precipitator comprises a separator, arranged for separating the precipitated struvite from the initial liquid of waste material, and an output for the precipitated struvite. The arrangement for recovering at least one of nitrogen, phosphorus and potassium from waste material further comprises an arrangement for decomposing struvite according to the third aspect. The feed input of the dissolving reactor is connected to the output for the precipitated struvite of the struvite precipitator.

One advantage with the proposed technology is that a cost effective method for decomposition of struvite is presented, which in turn enables formation of valuable ammonium phosphate using the nitrogen content in the struvite itself and at the same time to enable reuse of the magnesium source for repeated phosphorus/nitrogen/potassium precipitation. Other advantages will be appreciated when reading the detailed description.

### BRIEF DESCRIPTION OF THE DRAWINGS

The invention, together with further objects and advantages thereof, may best be understood by making reference to the following description taken together with the accompanying drawings, in which:
FIG. 1 is a flow diagram of steps of an embodiment of a method for decomposing struvite;
FIG. 2 is a schematic drawing of an embodiment of an arrangement for decomposing struvite;
FIG. 3 is a flow diagram of steps of an embodiment of a method for recovering at least one of nitrogen, phosphorus and potassium from waste material;
FIG. 4 is a schematic drawing of an embodiment of an arrangement for recovering at least one of nitrogen, phosphorus and potassium from waste material;
FIG. 5 is a flow diagram of parts steps of an embodiment of a step of removing phosphate ions from a solution;
FIG. 6 is a schematic drawing of an embodiment of a phosphate ion removing section;
FIG. 7 is a flow diagram of parts steps of an embodiment of a step of precipitating magnesium compounds;
FIG. 8 is a flow diagram of steps of another embodiment of a method for decomposing struvite;
FIG. 9 is a schematic drawing of a part of another embodiment of an arrangement for decomposing struvite;
FIG. 10 is a flow diagram of steps of yet another embodiment of a method for decomposing struvite;
FIG. 11 is a schematic drawing of a part of yet another embodiment of an arrangement for decomposing struvite;
FIG. 12 is flow diagram of steps of yet another embodiment of a method for decomposing struvite; and
FIG. 13 is a schematic drawing of a yet another embodiment of an arrangement for decomposing struvite.

### DETAILED DESCRIPTION

Throughout the drawings, the same reference numbers are used for similar or corresponding elements.

If an inexpensive source of magnesium and phosphorus was available, the potential is there, by use of struvite precipitation, to recover ammonia from nutrient-rich wastewaters, rather than biologically convert it back to atmospheric nitrogen.

Common to all prior art relating to struvite decomposition is that the focus is solely on recovery or removal of ammonium nitrogen. None of the prior art processes can enable recovery of phosphorus and reuse of the magnesium source for repeated phosphorus precipitation in form of struvite. In addition, none of the prior art can enable recovery of potassium from wastewater.

There is thus a need for a robust process that can enable decomposition of struvite to enable recovery of nitrogen as well as reuse of the magnesium and phosphorus sources for subsequent ammonium nitrogen removal in which the regeneration efficiency is not affected by co-precipitation of calcium phosphate, calcium carbonate, magnesium carbonate or potassium struvite.

There is a need for a process that can enable reuse of the magnesium and phosphorus from struvite separately and not in a combined magnesium phosphate form for enabling to adjust the Mg to P ratio for optimal ammonium nitrogen removal from wastewater.

There is a need for a process that can enable reuse of the magnesium and phosphorus from struvite in a reactive form such as e.g. di-magnesium phosphate of high quality. The constant quality of recovered di-magnesium phosphate should be assured independent on the struvite composition and number of repeated cycles.

There is a need for a robust method for struvite decomposition that is not energy intensive.

There is a need for a method for struvite processing that can omit the need to precipitate struvite in form of pellets in special fluidized bed reactors which require high capital and operational costs during wastewater treatment.

There is a need for a method for struvite decomposition with a favourable mass balance in which input chemicals are converted into final commercial products.

There is a need for a cost effective method for decomposition of struvite to enable formation of valuable ammonium phosphate using the nitrogen content in the struvite itself and at the same time to enable reuse of the magnesium source for repeated phosphorus precipitation.

There is a need for a simple method to enable recovery of potassium from wastewater.

According to the present technology, an inexpensive source of magnesium and/or phosphorus can be derived from the struvite molecule itself. This magnesium and/or phosphorus can thereafter be used for struvite precipitation from water effluents. This enables the recovery of the ammonium, phosphorus or potassium that is bound within struvite but originates from the water effluents.

Several attempts were made in the literature to provide a process for decomposing struvite to enable recovery or removal of ammonia.

Extensive research was dedicated to the thermal decomposition of struvite to enable release of ammonia from struvite by heating e.g. according to Stefanowicz et al. 1992. The main disadvantage of this approach is that after thermal decomposition of struvite a magnesium pyrophosphate residue is formed which is not effective in precipitating ammonium nitrogen from wastewater.

Thermal decomposition of struvite occurs in several steps. At the first step, ammonium struvite (MgNH₄PO₄·6H₂O) is converted to dittmarite (MgNH₄PO₄·H₂O) by the removal of water. Dittmarite is more thermally stable than struvite. Further heating of the formed dittmarite results in the release of additional water and ammonia forming eventually magnesium pyrophosphate (Mg₂P₂O₇).

Farhana, 2015, suggested to thermally decompose ammonium struvite in a fluidized bed reactor in which struvite pellets are kept fluidized in the reactor for 2 to 4 hours at a temperature of 85°C and at a relative humidity of 95%. The aim was to decompose struvite into di-magnesium phosphate instead of magnesium pyrophosphate by having a relatively low temperature and high humidity. The disadvantages of this process include high complexity due to requirement for struvite pellets of a certain size and hardness in order to be kept fluidized. The conversion of struvite to dimagnesium phosphate was found to be incomplete for several of the struvite pellets tested. The hardness and size of the pellets is a main factor regarding conversion efficiency and to get the process operational. Soft pellets could not be processed since they form dust. In addition the process is energy intensive requiring large amount of hot air and steam.

Common to all thermal struvite conversion processes is that the processes are not suitable for decomposing potassium struvite or calcium phosphates. Many wastewaters contain considerable amounts of dissolved potassium and calcium. This means that when struvite is precipitated from such wastewater at a high pH a mixture of several forms of struvite is usually present such as ammonium struvite (MgNH₄PO₄·6H₂O) together with potassium struvite (MgKPO₄·6H₂O). The presence of dissolved calcium leads to co-precipitation of calcium phosphate together with struvite. Since thermal struvite regeneration is based on thermally removing ammonia in a gaseous form it cannot regenerate calcium phosphates or potassium struvite. This means that if the struvite decomposition product from thermal processes is reused for wastewater treatment, the efficiency will be declining rapidly with time due to an accumulation of calcium and potassium in the residue that cannot be regenerated.

Zhang, S. et al. 2004 suggested a process to decompose ammonium struvite in a hot acid solution at pH between 4 and 5.5. The principle was to convert struvite to di-magnesium phosphate due to that di-magnesium phosphate has a lower solubility compared to struvite at slightly acidic pH and at temperatures above 25°C. The disadvantages of this process include low efficiency of conversion of struvite to di-magnesium phosphate. In addition, the process cannot regenerate the phosphorus from co-precipitated calcium phosphate since the solubility of calcium phosphate is considerably lower than that of di-magnesium phosphate at acidic pH. Furthermore, high phosphorus solubility at low pH results in considerable phosphorus losses in each regeneration cycle.

Zhang, T. et al. 2009 tested to decompose ammonium struvite thermally in a hot aqueous alkaline solution. The idea was to release the ammonia first to the aqueous solution forming tri-magnesium phosphate. The ammonia in the hot alkaline solution is converted into gaseous form and can be separated. The process has several disadvantages. The conversion of struvite into tri-magnesium phosphate was found to be incomplete. The process cannot regenerate the phosphorus from co-precipitated calcium phosphate since calcium phosphates are not soluble in alkaline solutions which means that the decomposition product is gradually being fouled with calcium decreasing its efficiency.

Huang et al. 2015 suggested a process for decomposing struvite by addition of sodium hypochlorite to form di-magnesium phosphate. The main disadvantage of the process is that nitrogen cannot be recovered and is lost in form of nitrogen gas. In addition, the process has high operational costs and similar to other struvite decomposition processes cannot regenerate potassium struvite or calcium phosphates which reduces the efficiency of the decomposition product if repeated used in real wastewater.

Huang et al. 2015 further suggested a process for decomposition of struvite by using microwave radiation. The struvite is mixed with sodium hydroxide and treated by microwave radiation to release ammonia and convert struvite into a sodium magnesium phosphate compound which is claimed to be reactive for aqueous ammonia removal by struvite precipitation. The disadvantages of this process includes high operational and capital costs, need for complicated equipment and requirement for large amounts of sodium hydroxide. In addition, the process is not suitable for regeneration of potassium struvite or calcium phosphates which results in poor ammonia removal capacity over time.

Hao et al., 2011 suggested a process for electrochemical decomposition of struvite. The main disadvantage is that nitrogen cannot be recovered and is lost in form of nitrogen gas as well as high capital and operational costs.

However, according to the here presented technology, struvite is instead dissolved using sulphuric acid (H₂SO₄). The acid solution is first freed from at least a part of the phosphorus ions and then ammonium and magnesium components are separated. The extracted phosphorus, ammonium and magnesium are provided in forms that are either commercially attractive or can be re-utilized in e.g. a wastewater application. There are many attractive solutions of the different part processes.

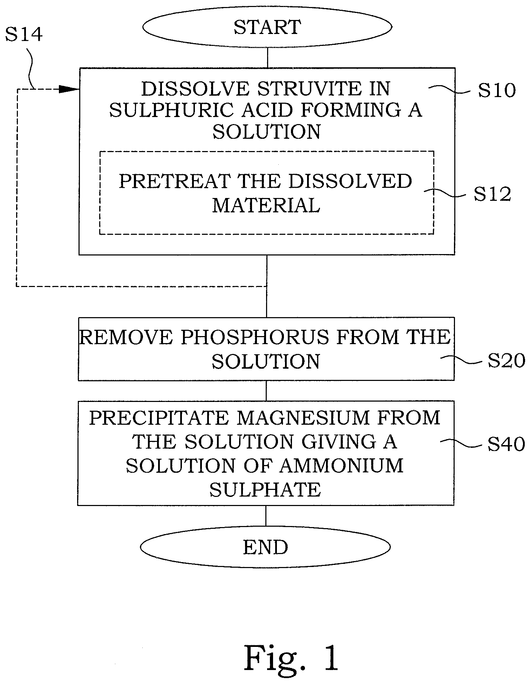

Figure 1 illustrates a flow diagram illustrating steps of an embodiment of a method for decomposing struvite. In step S10, a feed material comprising struvite is dissolved in H₂SO₄. This dissolving results in the formation of a clear acid solution. This acid solution comprises phosphate ions, magnesium ions and ammonium ions.

The dissolution of the struvite in sulphuric acid takes place according to the following chemical reaction:

2 NH₄MgPO₄·6H₂O + 3 H₂SO₄ → 2 H₃PO₄ + (NH₄)₂SO₄ + 2 MgSO₄ + 12 H₂O

Sulphuric acid is produced as a by-product from several industrial processes such as refining of copper sulphide ore, refining of iron sulphide ore etc.

Since sulphuric acid is an unavoidable by-product for production of several valuable products, the production of such products is in many cases limited by finding an outlet for the by-product sulphuric acid. Usually, this is solved by industrial symbiosis, i.e. the by-product sulphuric acid is used as a raw material for production of another product.

As discussed in the introduction, struvite is rarely precipitated in a pure form of ammonium-struvite. Wastewater usually contain significant amounts of calcium, potassium and carbonates which usually result in a significant co-precipitation of calcium phosphates, calcium carbonates, potassium struvite, and magnesium carbonate.

According to the present technology, the above mentioned co-precipitates do not interfere with the struvite processing method. This makes the process according to the present invention a robust technology in which mixtures of different struvite precipitates originating from different applications and thus having different chemical composition can be processed in a single central plant.

Co-precipitated calcium phosphate is recrystallized in sulphuric acid, binding the calcium as gypsum according to the following equation:

Ca₃(PO₄)₂(s) + 3 H₂SO₄ → 2 H₃PO₄ + 3 CaSO₄(s)

Co-precipitated calcium carbonate is similarly dissolved in sulphuric acid under emission of carbon dioxide and the calcium is precipitated as gypsum according to the following equation:

CaCO₃(s) + H₂SO₄ → CaSO₄(s) + CO₂↑ + H₂O

Co-precipitated magnesium carbonate is dissolved in sulphuric acid under emission of carbon dioxide according to the following equation:

MgCO₃(s) + H₂SO₄ → MgSO₄ + CO₂↑ + H₂O

Co-precipitated potassium struvite is dissolved in sulphuric acid according to the following equation:

2 NH₄KPO₄·6H₂O + 3 H₂SO₄ → 2 H₃PO₄ + K₂SO₄ + 2 MgSO₄ + 12 H₂O

The solution comprising ammonium sulphate will thus also comprise potassium sulphate Co-precipitated sodium struvite is dissolved in sulphuric acid according to the following equation:

2 NH₄NaPO₄·6H₂O + 3 H₂SO₄ → 2 H₃PO₄ + Na₂SO₄ + 2 MgSO₄ + 12 H₂O

The solution comprising ammonium sulphate will thus also comprise sodium sulphate

The calcium will thus be removed from the solution in the form of precipitated gypsum, while magnesium and potassium will remain in solution.

The cations are in the form of sulphates and phosphate in the form of phosphoric acid. As indicated above, carbonates are converted to carbon dioxide during the dissolution which separates as gas from the struvite leach solution.

In one embodiment, e.g. the embodiment illustrated in Figure 1, the step S10 may comprise an optional step S12, in which the dissolved material in H₂SO₄ is pretreated to form the acid solution. The pretreating may comprise separating of undissolved substances and possible precipitated gypsum, if the feed material further comprises calcium. The pretreating may also comprise removing of organic compounds.

Precipitated struvite can contain some acid-insoluble components such as sand, etc. The non-insoluble residue is therefore separated with any suitable solid/liquid separation technique such as filtration, centrifugation, sedimentation, etc.

Since some organic material can also co-precipitate with struvite, some dissolved organic matter can enter the struvite leach solution. The dissolved organic matter is therefore preferably separated from the struvite leach solution. Several options exist for separation of dissolved organic matter such as adsorption on activated carbon, chemical oxidation, flocculation, etc.

According to the here presented technology, the dissolution of struvite is performed in a way to enable production of a leach solution preferably with as high concentration as possible. The production of a concentrated solution during struvite dissolution enables the efficient recovery of the sulphate from sulphuric acid in form of fertilizers. It has been found that the fraction of extracted of phosphate ions in some embodiments are favoured by a high original concentration of dissolved struvite.

To this end, in a preferred embodiment, as indicated by the arrow S14 of Figure 1, a back bleed of a part of the leach solution after the dissolving process is performed. In other words, a part of the leach solution is recycled and reused as an additional solvent in a subsequent dissolving step. Experiments have shown that a bleed back of 20% of the leach solution may lead to a twice as high concentration of phosphate ions in the leach solution compared to an approach without bleed back. A bleed back of 30% gives almost 2.5 times as high final phosphate ion concentration.

The struvite leach solution after pretreatment is ready for chemical processing.

Thus, independent on the composition of the co-precipitates, the struvite leach solution will contain the following elements in a soluble form: sulphate, phosphate, ammonium, magnesium, and optionally potassium.

A main advantage of the present technology is that the struvite entering to the processing plant does not need to be e.g. in a form of pellets as in state-of-the-art struvite precipitation technologies. The main reason is that the intention is not to spread the struvite on agricultural land but instead dissolve it in sulphuric acid. Since pellets are not required, the struvite precipitation process can be done in a simple and low cost manner. Struvite can be precipitated in a simple reactor with a short reaction time followed by simple solid liquid separation such as by filtration and/or sedimentation.

Again, returning to Figure 1, in step S20, phosphorus is removed from the acid solution. This results in the forming of a phosphorus-depleted solution. The removed phosphorus may, as will be discussed further below, be utilized for forming precipitator substances for waste water treatment, or may be allowed to react and form different kinds of commercially valuable substances, such as different kinds of fertilizers.

As also will be discussed further below, a preferred ways of separating at least a part of the phosphorus from the struvite leach solution is to use solvent extraction.

When the phosphorus is removed, at least partially, a further easily performed separation of the other components is enabled. In step S40, magnesium is precipitated from the solution. The precipitated magnesium compounds are easily separated, forming a solution comprising ammonium sulphate.

The magnesium content becomes available, typically as magnesium carbonate, as will be discussed further below. This magnesium may, as also discussed below, preferably be reused as a magnesium source for waste water treatment, but may also be turned into other products of commercial interest.

An ammonium sulphate solution is formed in step 40. Such an ammonium sulphate solution may be used as such as an end product, or may be further processed.

In other words, a method for decomposing struvite comprises dissolving, in sulphuric acid, of a feed material comprising struvite, forming a solution, removing phosphate ions from the solution, and precipitating magnesium compounds from the solution, after the removing of phosphate ions, by increasing a pH of the solution, forming a solution comprising ammonium sulphate.

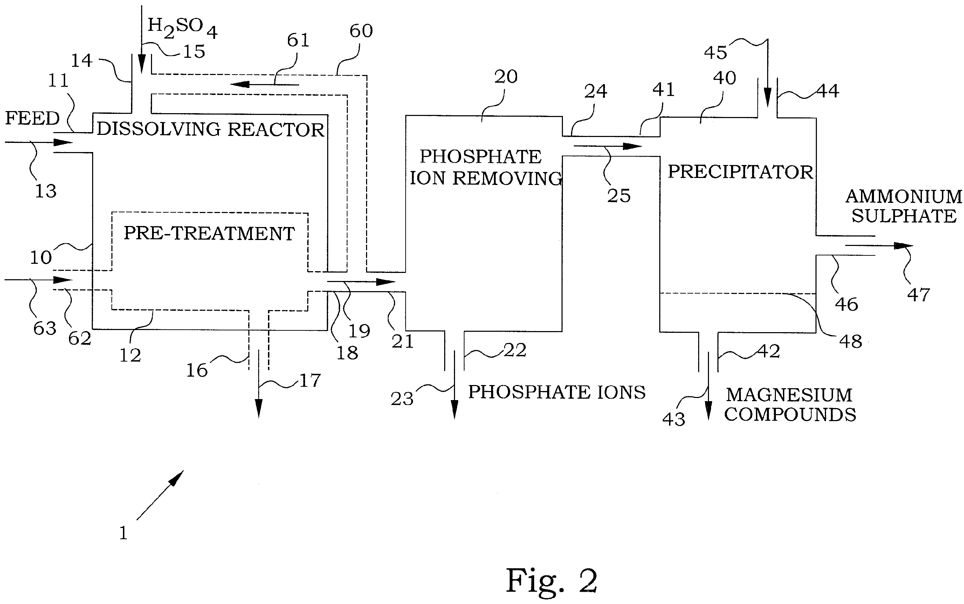

Figure 2 illustrates a schematic illustration of an embodiment of an arrangement 1 for decomposing struvite. In this embodiment, the arrangement 1 for decomposing struvite comprises a dissolving reactor 10, a phosphate ion removing section 20 and a precipitator vessel 40. The dissolving reactor, configured for mixing struvite and sulphuric acid 15 for causing dissolution of the struvite. The dissolving reactor 10 has a feed input 11 for entering feed material 13 comprising struvite. The dissolving reactor 10 also has an acid input 14 for entering sulphuric acid 15. The dissolving reactor 10 further has an output 18 for a solution comprising dissolved struvite 19.

The phosphate ion removing section 20 is configured for extracting phosphate ions from the solution entered thereto. The phosphate ion removing section 20 thereby has an input 21 for entering the solution comprising dissolved struvite 19, connected to the output 18 for a solution comprising dissolved struvite 19 of the dissolving reactor 10. The phosphate ion removing section 20 also has an output 22 for a liquid comprising extracted phosphate ions 23, and an output 24 for the solution after phosphate ion extraction 25.

The precipitator vessel 40 is configured for precipitating magnesium compounds 43 from the entered solution by increasing a pH of the solution. The precipitator vessel 40 has a separation arrangement 48 for separating the precipitated magnesium compounds 43 from the remaining solution. The precipitator vessel 40 has an input 41 for the solution, directly or indirectly connected to the output 24 for the solution after phosphate ion extraction 25 of the phosphate ion removing section 20. The precipitator vessel 40 has also an input 44 for pH regulating substances 45. The precipitator vessel 40 further has an output 42 for the precipitated magnesium compounds 43 and an output 46 for a solution comprising ammonium sulphate 47.

In a preferred embodiment, pre-treatment of the dissolved solution is performed for preparing the solution for the coming operation steps. Therefore, the dissolving reactor 10 preferably further comprises pretreatment arrangements 12 for pretreating of the dissolved material to form the solution 19. The pretreatment arrangements 12 comprise a separator for separating of undissolved substances 17 and/or an organic compounds removing arrangement. In these pretreatment arrangements 12 different processes for purifying the acid solution may thus be performed. Organic compounds may e.g. be removed by use of activated carbon, chemical oxidation or other processes, as such well known in the art. Additional substances 63 may thereby be added through a pretreatment inlet 62 and removed impurities 17 as well as undissolved substances may be exited through an impurity outlet 16. In cases where the feed material 13 further comprises calcium, the addition of sulphuric acid will cause a precipitation of gypsum. Thereby, the separator is arranged for separating of e.g. gypsum from the solution 19 as a part of the impurities and undissolved substances 17.

As mentioned further above, back bleed of the solution is typically advantageous, even though it is not absolutely necessary. Therefore in a preferred embodiment, there is provided, as a part of the dissolving reactor features, a back-bleed connection 60. The back bleed connection 60 is arranged for recycling a part 61 of the solution exiting said pretreatment arrangements 19 to be used in a subsequent dissolving of struvite. Typically, the back bleed part 61 is entered into the dissolving reactor 10 together with the sulphuric acid 15 through the acid input 14. Alternatively, the back bleed could have a separate input into the dissolving reactor 10.

The method according to Figure 1 and the arrangement according to Figure 2 can be operated as such as methods and arrangements for general decomposition of struvite. The struvite is thereby decomposed into valuable substances comprising the components phosphorus, typically in the form of phosphate ions, nitrogen, typically in the form of ammonia, and magnesium, typically as a salt.

However, the decomposition of struvite can also be implemented as a part of other industrial processes. As mentioned in the background, some waste water treatment approaches extracts nitrogen and phosphorus by precipitation of struvite. By having access to the above presented decomposition of struvite, such a waste water treatment can be developed further to be more economical and efficient, in particular if the separated magnesium products can be reused for the struvite precipitation.

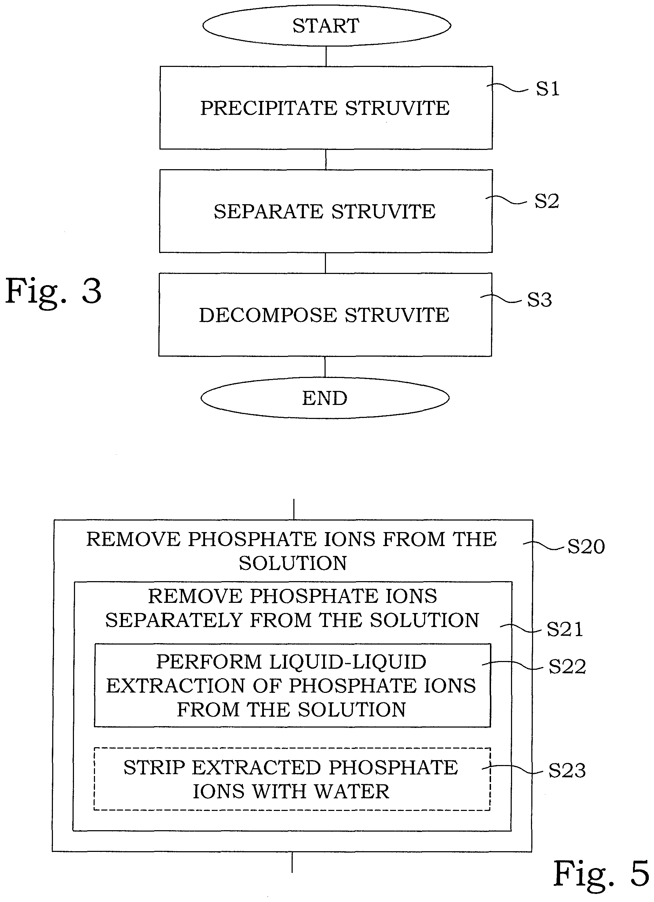

Figure 3 illustrates a flow diagram illustration steps of an embodiment of a method for recovering at least one of nitrogen, phosphorus and potassium from waste material. In step S1, struvite is precipitated from an initial liquid of waste material. This is achieved by adding a magnesium source to the initial liquid of waste material and adjusting a pH of the initial liquid of waste material to assume an alkaline pH. In step S2, the precipitated struvite is separated from the initial liquid of waste material. In step S3, the separated struvite is decomposed. This decomposing is preferably performed by a method according to what was described here above.

In other words, an embodiment of a method for recovering at least one of nitrogen, phosphorus and potassium from waste material comprises precipitating of struvite from an initial liquid of waste material, by adding a magnesium source to the initial liquid of waste material and adjusting a pH of the initial liquid of waste material to an alkaline pH. The precipitated struvite is separated from the initial liquid of waste material and the separated struvite is decomposes by a method according to the procedures disclosed elsewhere in this disclosure.

As was considered above, calcium provided together with the struvite is precipitated as gypsum during the dissolving process and will not interfere with the remaining process. Lime is a relatively inexpensive base and is therefore a suitable choice for adjusting the pH in the initial liquid of waste material. In other words, preferably, adjusting a pH of the initial liquid of waste material to an alkaline pH is performed by adding lime.

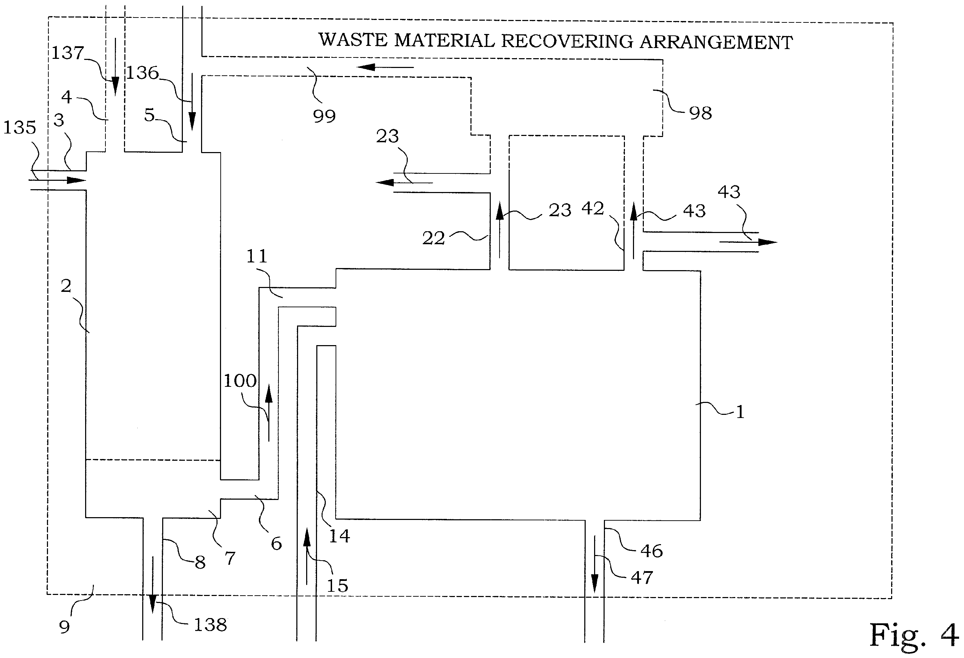

Figure 4 illustrates, in analogy, an embodiment of an arrangement 9 for recovering at least one of nitrogen, phosphorus and potassium from waste material. The arrangement 9 for recovering at least one of nitrogen, phosphorus and potassium from waste material comprises in this embodiment a struvite precipitator 2, here in the form of a waste material treatment tank, and an arrangement 1 for decomposing struvite. The arrangement 1 for decomposing struvite is preferably arranged according to any of the embodiments of arrangements for decomposing struvite presented in the present disclosure.

The struvite precipitator 2 has an inlet 3 for an initial liquid 135 of waste material. The struvite precipitator 2 also has an inlet 5 for a magnesium source 136. Depending on the type of magnesium source 136, it may be necessary also to have an optional inlet 4 for a base 137. The inlets 4 and 5 may of course be arranged as one common inlet. The struvite precipitator 2 is configured for precipitating struvite 100 from the initial liquid 135 of waste material. This is achieved by adding the magnesium source 136 and adjusting a pH of the initial liquid 135 of waste material to an alkaline pH. This pH adjustment may be performed by the magnesium source, e.g. if magnesium hydroxide is used. For other magnesium sources, additional bases 137 may be added for adjusting the pH. As mentioned above, lime is an inexpensive base, and calcium is easily separated as gypsum in the continued process.

In one embodiment, the struvite precipitator 2 has an input for lime, for enabling the adjusting a pH of the initial liquid of waste material 13 to an alkaline pH.

The struvite precipitator 2 comprises a separator 7 configured for separating the precipitated struvite 100 from the initial liquid 135 of waste material. The struvite precipitator 2 has an outlet 8 for liquid 138 of waste material separated from the precipitated struvite 100, and an outlet 6 for the precipitated struvite 100.

In other words, an embodiment of an arrangement for recovering at least one of nitrogen, phosphorus and potassium from waste material comprising a struvite precipitator and an arrangement for decomposing struvite. The struvite precipitator has an input for an initial liquid of waste material, and an input for a magnesium source, i.e. magnesium compounds. The struvite precipitator is arranged for mixing the initial liquid and the magnesium compounds, and for adjusting a pH of the initial liquid of waste material to an alkaline pH, whereby struvite precipitates. The struvite precipitator comprising a separator, arranged for separating the precipitated struvite from the initial liquid of waste material, and an output for the precipitated struvite.

The arrangement for decomposing struvite is arranged according to the principles presented elsewhere in this disclosure. The feed input of the dissolving reactor is connected to the output for the precipitated struvite of the struvite precipitator.

As will be discussed more in detail below, at least a part of the magnesium compounds 43 and optionally at least a part of the phosphate ions 23 resulting from the decomposition of the struvite in the arrangement 1 for decomposing struvite, may be utilised as at least a part of the magnesium source 136 entered into the struvite precipitator 2. A reactor 98 may be connected to the output 42 for the precipitated magnesium compounds 43 and optionally the output 22 for a liquid comprising extracted phosphate ions 23 and the reactor 98 is adapted for preparing the magnesium source 136 from the magnesium compounds 43 and optionally the phosphate ions 23. A magnesium recirculation connection 99 is thereby provided from the reactor 98 to the waste material treatment tank 2.

The removal of the phosphate ions can be performed in different ways. If the phosphate ions are to be used in any particular way the form of the phosphate ion removal can be adapted to that indented final use of the ions. As hinted here above, phosphate ions are necessary to cause a struvite precipitation from waste material. If the available amount of phosphorous in the waste material is too low in comparison with e.g. the nitrogen content, it might be of interest to add phosphate ions in connection with the struvite precipitation. Phosphate ion separated from the dissolved struvite could then be re-used and the form in which the phosphate ions are removed may be adapted to be suitable for such recycling.

However, in general utilization of phosphate ions, a solution of phosphoric acid, e.g. phosphate ions dissolved in a water solution is often of benefit. Therefore, as illustrated in a flow diagram of an embodiment of the step S20 in Figure 5, in one preferred embodiment, the step S20 of removing phosphate ions from the solution comprises the step S21 of removing at least a part of the phosphate ions from the solution separately from other cations. This means that from the originally present ions in the acid solution, only phosphate ions are removed, (neglecting H⁺ or H₃O⁺ ions), leaving remaining ions, such as sulphate, ammonium, magnesium, and optionally potassium, in the solution. The removal process may not necessarily be absolutely complete, which means that there might be some remaining phosphate ions also. However, the solution leaving this step is at least partially depleted from phosphate ions.

In the particular embodiment of Figure 5, a liquid-liquid extraction of phosphate ions from the solution is performed in step S22. The liquid-liquid extraction is performed by contacting the solution with an organic solvent, whereby the organic solvent becomes loaded with phosphate ions.

It has surprisingly been found that phosphoric acid can be selectively separated from a struvite leach solution by using extraction into an organic solvent according to the following equation:

2 H₃PO₄ + (NH₄)₂SO₄ + 2 MgSO₄ + 12 H₂O → (extraction H₃PO₄) →

→ (NH₄)₂SO₄ + 2 MgSO₄ + 12 H₂O

Any organic solvent capable of removing phosphorus from aqueous solutions can be used in a liquid-liquid extraction section. The composition of the solvent should be selected to obtain a high loading capacity, sufficient selectivity and an effective operational extraction process.

Most suitable solvents are liquid organic molecules containing oxygen atoms (alcohols, esters, ethers, ketons, trialkyl phosphates, amides, etc.) which interact with phosphoric acid to form H-associations. During this mechanism, the extractant replaces part of the water molecules and solvates the phosphoric acid molecule in the organic phase. The binding of phosphoric acid is weak through H-association. Solvating extractants can be divided into two groups: a) solvents that have a reasonably constant distribution coefficient down to fairly low concentrations such as alcohols, tributyl phosphate, etc., and b) solvents which show very little extraction capacity for phosphoric acid below a specific threshold concentration, i.e., the distribution coefficient is very sharply concentration dependent such as for ethers, esters and selected ketones e.g. methyl isobutyl ketone. For the present application it is preferred to use mixtures of solvents that have a reasonably constant distribution coefficient down to fairly low concentrations such as tributyl phosphate which has a strong extraction power for phosphate from struvite leach solution even at very low concentrations mainly due to a salting out effect of the sulphate salts on phosphorus extraction.

It has been experimentally shown by the present applicant that phosphoric acid is selectively extracted from a struvite leach solution. The co-extraction of magnesium sulphate, ammonium sulphate, and potassium sulphate is minimal. In the experiment, the levels of Mg and S were below the detection limit of inductively coupled plasma atomic emission spectroscopy (ICP-AES) and ammonium nitrogen was below the photometry detection limit.

However, it was also discovered that it was difficult to completely remove all phosphate ions. Typically a low remaining concentration of phosphate ions were left in the solution. Therefore, as discussed above, it is considered to be advantageous to have an as high phosphate ion concentration as possible in the incoming struvite leach solution. This may be achieve e.g. by back bleed as described further above. At higher phosphate concentrations, a larger degree of the phosphate content is possible to extract. Preferably, a phosphate concentration of at least 2M is desirable.

The solvent extraction process is preferably a continuous process using any suitable liquid-liquid extraction equipment such mixer settlers, pulsed columns, agitated columns, non-agitated columns, inline mixers, centrifugal contactors, etc.

The organic solvent loaded with phosphoric acid is optionally scrubbed with a small amount of water or phosphoric acid to remove co-extracted sulphate salts.

Thereafter the solvent is stripped with a suitable solution. Any suitable stripping solution can be used for this purpose such as: water, mono-ammonium phosphate, aqueous ammonia, sodium carbonate, sodium hydroxide, etc.

One embodiment of the step S21 of removing phosphate ions separately from the solution further comprises provision of ammonia or solutions of ammonium phosphates to phosphate ions of the organic solvent loaded with phosphate ions, whereby ammonium phosphates are formed.

In a particular embodiment, the organic solvent loaded with phosphate ions is stripped with a strip solution of a mono-ammonium phosphate solution. Ammonia is added to the phosphate loaded strip solution, causing precipitation of mono-ammonium phosphate. The precipitated mono-ammonium phosphate is separated from the strip solution.

The steps of this embodiment follows, as such, the teachings in the published International patent publication WO 2013/191639 A1. Details of the application of such a part method can easily be understood by anyone skilled in the art in the light of the above mentioned publication and are therefore not repeated here. Stripping the organic solvent with a solution of mono-ammonium phosphate is performed in order to recover solid ammonium phosphates as a product.

Since sulphate ions are available in the solution, being a potential component in a ammonium sulphate product, and since phosphate ions may be useful for causing a subsequent precipitation of struvite, as discussed above, other alternatives for the removal of phosphorus ions by liquid-liquid extraction may not be connected to the direct formation of ammonium phosphates. Figure 5 illustrates as an option, an embodiment of the step S20 of removing phosphorus from the acid solution comprising a step S23, in which the organic solvent loaded with phosphate ions is stripped with water. This stripping forms a solution of phosphoric acid. The output from the step S20 of removing phosphorus from the acid solution is thus a solution of phosphoric acid.

In other words, in one embodiment, the removing of at least a part of the phosphate ions from the solution separately from other cations further comprises stripping of the organic solvent loaded with phosphate ions with water; forming a phosphoric acid solution.

Stripping the organic solvent with water thus results in the production of phosphoric acid. The concentration of phosphoric acid can be increased by stripping with a small amount of water in several contact stages according to processes, as such known to the skilled in the art.

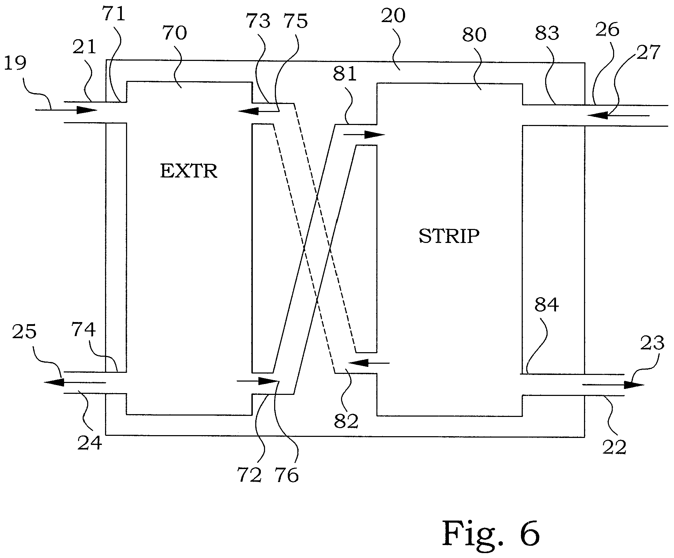

In Figure 6, an embodiment of the phosphate ion removing section 20 is illustrated in more detail. In this embodiment, the phosphate ion removing section 20 comprises a liquid-liquid extraction arrangement 70 and a stripping arrangement 80. In other words, phosphate ion removing section 20 is configured for removing at least a part of the phosphate ions from the solution separately from other cations. The liquid-liquid extraction arrangement 70 has an inlet 71 for the solution comprising dissolved struvite 19 and an inlet 73 for an organic solvent 75. The liquid-liquid extraction arrangement 70 is configured for contacting the solution comprising dissolved struvite 19 with the organic solvent 75, whereby the organic solvent becomes loaded with phosphate ions 76 The liquid-liquid extraction section has an outlet 72 for the organic solvent loaded with phosphate ions 76, and an outlet 74 for the solution after phosphate ion extraction 25. In other words, the phosphate ion removing section 20 comprises a liquid-liquid extraction arrangement 70, arranged for contacting the solution with an organic solvent 75, whereby the organic solvent becomes loaded with phosphate ions 76.

The stripping arrangement 80 has an inlet 81 for the organic solvent loaded with phosphate ions 76 connected to the outlet 72 for the organic solvent loaded with phosphate ions 76 of the liquid-liquid extraction arrangement 70. The stripping arrangement 80 is configured for stripping the organic solvent of its phosphate ions. Therefore, the stripping arrangement 80 has an outlet 82 for the organic solvent depleted of phosphate ions. The outlet 82 for the organic solvent depleted of phosphate ions is connected to the inlet 73 for an organic solvent 75 of the liquid-liquid extraction arrangement 70. A suitable stripping solution 27 is entered into the stripping arrangement 80 through a stripping solution input 26. Thereafter the solvent is stripped with the stripping solution. Any suitable stripping solution can be used for this purpose such as: water, mono-ammonium phosphate, aqueous ammonia, sodium carbonate, sodium hydroxide, etc. The stripping solution loaded with phosphate ions, i.e. the liquid comprising extracted phosphate ions 23, is exited through the output 22.

As described above, many suitable stripping solutions are available. In one embodiment, water is used as stripping solution. The phosphate ions are thereby stripped from the organic solvent and ends up in the aqueous phase, thus forming a phosphoric acid solution. This phosphoric acid solution is exited as the liquid comprising extracted phosphate ions 23 mentioned above.

In other words, the phosphate ion removing section 20 further comprises a stripping arrangement 80, arranged for stripping said organic solvent loaded with phosphate ions 76 with water; whereby the output 22 for a liquid comprising extracted phosphate ions 23 is arranged for outputting a phosphoric acid solution.

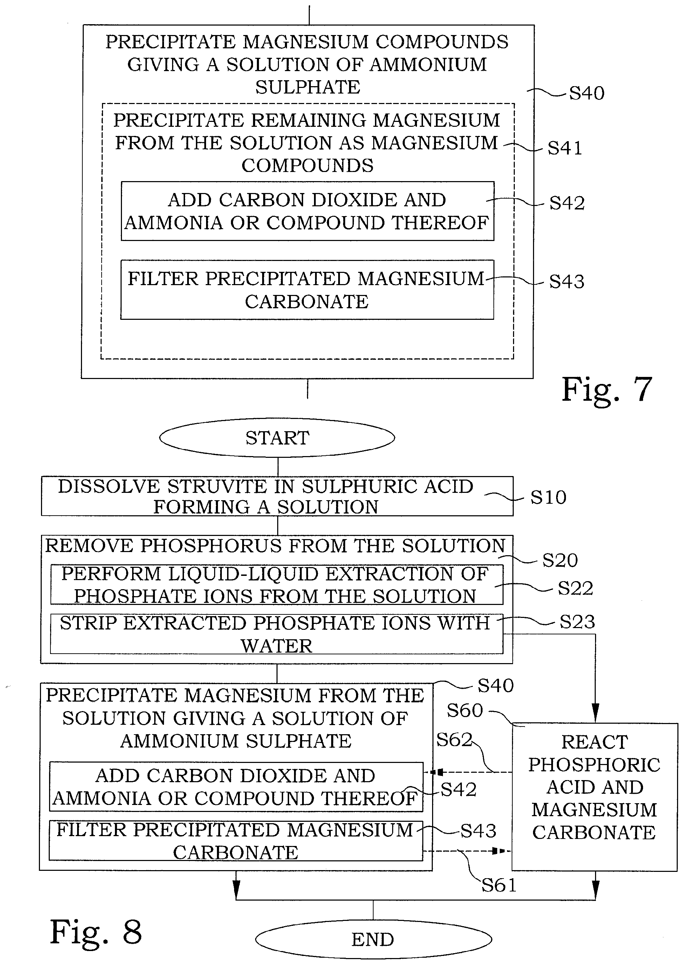

Figure 7 illustrates a flow diagram of part steps of an embodiment of step S40 of precipitating magnesium compounds. In a step S42, carbon dioxide and ammonia or compounds thereof are added to the solution after the removal of the phosphate ions. The added substances are preferably of at least one of:
carbon dioxide and ammonia,
ammonium carbonate, and
ammonium bicarbonate.

Carbon dioxide and ammonia are typically provided as gases, while ammonium carbonate and ammonium bicarbonate typically are provided in solid phase. These substances provides, in an aqueous solution, ammonium ions and carbonate ions. The added substances are provided in an amount causing a neutralization of the solution, due to the basic nature of the ammonia. The amount of added substances should also be sufficient to cause precipitation of substances comprising magnesium carbonate. Precipitation of substances comprising magnesium carbonate from a solution of magnesium and sulphate ions by means of e.g. carbon dioxide and ammonia is, as such, known in prior art. In Wang et al 2011, carbon dioxide has been captured from gas mixtures to be bound in substances comprising magnesium carbonate, e.g. nesquehonite or hydromagnesite.

Upon addition of ammonium carbonate or ammonia and carbon dioxide to the reactor magnesium is precipitated. One possibility is precipitation in form of magnesium carbonate according to the following reaction:

(NH₄)₂SO₄ + 2 MgSO₄ + 4 NH₃ + 2 CO₂ + H₂O → 2 MgCO₃↓ + 3 (NH₄)₂SO₄.

By using ammonium bicarbonate, the reaction instead becomes:

(NH₄)₂SO₄ + 2 MgSO₄ + 2 NH₄HCO₃ + H₂O → 2 MgCO₃↓ + 2 (NH₄)₂SO₄ + H₂SO₄,

where additional ammonia can neutralize the sulphuric acid.

Another possibility for the magnesium precipitation is precipitation hydromagnesite according to the following reaction:

5 (NH₄)₂SO₄ + 10 MgSO₄ + 16 NH₃ + 8 CO₂ + 12 H₂O → → 2 Mg₅(CO₃)₄(OH)₂↓ + 13 (NH₄)₂SO₄+ 2 H₂SO₄

where additional ammonia can neutralize the sulphuric acid.

This reaction tends to be favoured by a high CO₃/Mg ratio.

As a result, a solution comprising ammonium sulphate is formed. As will be discussed further below, ammonium sulphate is a substance that is useful e.g. as a fertilizer. The entire process thereby results in the extraction of the ammonium of the original struvite as ammonium sulphate. The total process with precipitation of magnesium carbonate thus becomes:

2 NH₄MgPO₄·6H₂O + 3 H₂SO₄ + 4 NH₃ + 2 CO₂ → → 2 H₃PO₄(extracted) + 2 MgCO₃↓ + 3 (NH₄)₂SO₄ + 11 H₂O

At a first glance, it may be seem strange to add ammonia to the process aiming for extraction of ammonium ions. However, since sulphuric acid is added in the beginning of the process in an amount that exceeds the amount necessary to form ammonium sulphate from the ammonium originating from the struvite, excess sulphate ions have to be taken care of in some way. One simple solution is then to add ammonia to end up with only one end product, making further separation unnecessary. Since ammonium sulphate is a valuable substance, this solution becomes very attractive.

It is also possible to recover ammonia from a part flow of the ammonium sulphate solution itself. This can be done by methods known to the skilled in the art such as addition of lime Ca(OH)₂ to precipitate gypsum and form ammonia that can be recycled. Another alternative includes generation of sulphuric acid and ammonia from a part flow of the ammonium sulphate solution by using bipolar membrane electrodialysis. In this option, electricity is used instead of addition of chemicals and both ammonia and sulphuric acid can be recycled within the process.

When the magnesium carbonate has precipitated, the precipitated carbonates are filtered, as illustrated in step S43, providing the separation of the solution of ammonium sulphide.

It was further found that precipitation of magnesium carbonate was facilitated by increasing the temperature of the solution. Therefore, in a preferred embodiment, the step of precipitating magnesium compounds further comprises the step of heating the solution.

As will be discussed further below, an intervening co-removing process may be performed before the addition of ammonia and carbon dioxide, removing a part of the magnesium. In such embodiments, the addition of ammonia and carbon dioxide or compounds thereof becomes a part of a step S41, in which remaining magnesium is precipitated from the solution as magnesium compounds.

Returning to Figure 2, the input 44 for pH regulating substances 45 of the precipitator vessel 40 is in one embodiment configured for adding of at least one of:
carbon dioxide and ammonia,
ammonium carbonate, and
ammonium bicarbonate;

The input 44 for pH regulating substances 45 of the precipitator vessel 40 is further configured to add it in an amount neutralizing the solution and causing precipitation of magnesium carbonate. Analogously, the separation arrangement 48 of the precipitator vessel 40 comprises a filter for filtering of the precipitated magnesium carbonate from the neutralized solution.

In a preferred embodiment, the precipitator vessel 40 further comprises a heater configured for heating the solution in the precipitator vessel 40 or in the input 41 for the solution of the precipitator vessel 40.

Figure 8 illustrates a flow diagram of steps of an embodiment of a method for decomposing struvite. The embodiment comprises the step S23, in which water is used to strip phosphate ions. Following this step, there is a step S60, in which at least a part of the solution of phosphoric acid, being the result of step S23, is reacted with magnesium carbonate, forming di-magnesium phosphate and gaseous carbon dioxide. The di-magnesium phosphate is a useful compound within this field of technology, since it constitutes one suitable compounds to be used for causing precipitation of struvite from e.g. a flow of waste water. Di-magnesium phosphate will readily react with ammonium ions, preferably in a basic environment, to form struvite. Since there typically is a higher concentration of ammonium ions compared to phosphorus ions in waste water, both magnesium and phosphorus are provided by this compound in order to enable extraction of ammonium ions.

Since the extracted phosphate ions described above are obtained in form of phosphoric acid, in a preferred embodiment, the recovered phosphoric acid is reacted with the separated magnesium carbonate to form dimagnesium phosphate according to the following reaction:

H₃PO₄ + MgCO₃ + 2 H₂O → MgHPO₄·3H₂O + CO₂

In a preferred embodiment, at least a part of the magnesium carbonate used in the step S60 of reacting the solution of phosphoric acid with magnesium carbonate, is constituted by the magnesium carbonate precipitated in the step S43 of precipitating magnesium compounds, as indicated by an arrow S61 in the figure. In this way, the magnesium content in the struvite can be re-utilized as a magnesium source for the precipitation of new struvite at a later occasion. The magnesium can therefore be used in a closed recycled manner, removing the need of continuous addition of magnesium to the system.

Also other compounds formed by the extracted magnesium can be used as a magnesium source for precipitation of struvite.

In another preferred embodiment, also the carbon dioxide created in step S60 can be reutilized. To this end, at least a part of the gaseous carbon dioxide emitted in the step of reacting S60 the solution of phosphoric acid with magnesium carbonate is used in the step S42 of precipitating magnesium compounds. This is indicated by the arrow S62. In this way, there may be no net emission of carbon dioxide from the process. The recovered carbon dioxide can be recycled in a gaseous form or in form of carbonic acid solution.

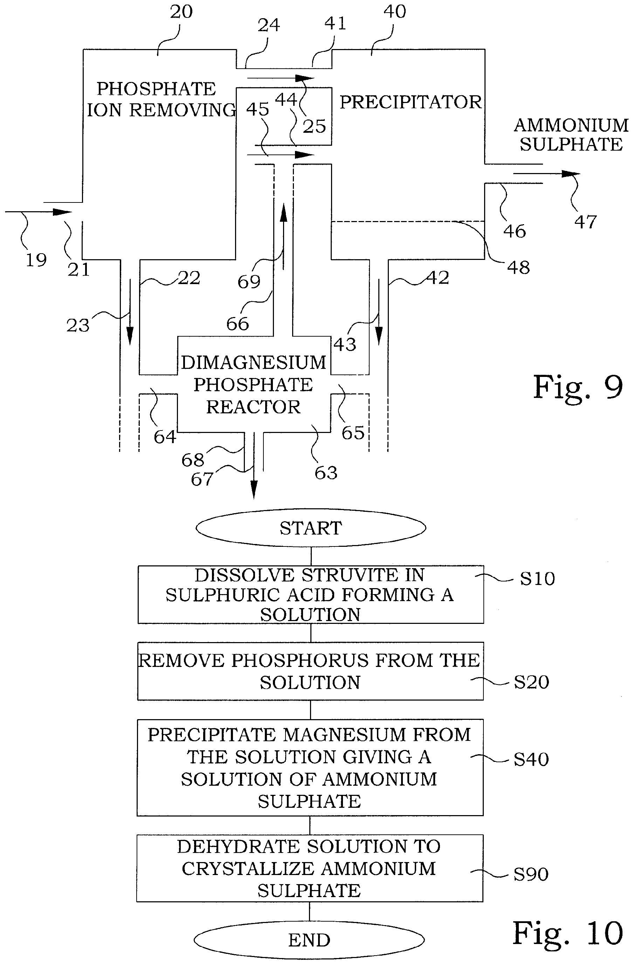

These preferred method steps also have impact on the design of the used arrangements. In Figure 9, a schematic drawing of an embodiment of a part of an arrangement for decomposing struvite is illustrated. The phosphate ion removing section 20 is configured for extracting phosphate ions in the form of a solution of phosphoric acid. In other words, the liquid comprising extracted phosphate ions 23 is in this embodiment a phosphoric acid solution. A di-magnesium phosphate reactor 63 is arranged for mixing the solution of phosphoric acid with magnesium carbonate to react and form di-magnesium phosphate 67 and gaseous carbon dioxide 69. The di-magnesium phosphate reactor 63 has an acid input 64 for entering the solution of phosphoric acid from the phosphate ion removing section 20, an input 65 for entering magnesium carbonate, an output 68 for the di-magnesium phosphate 67 and a gas output 66 for the gaseous carbon dioxide 69.

In a preferred embodiment, the precipitator vessel 40 is arranged with a filter for filtering of precipitated magnesium carbonate from the neutralized solution. The input 65 for entering magnesium carbonate is connected to the output 42 for the precipitated magnesium compounds of the precipitator vessel 40 for enabling a use of at least a part of said precipitated magnesium carbonate in said di-magnesium phosphate reactor.

In a preferred embodiment, the di-magnesium phosphate reactor 63 constituted the reactor 98 as illustrated in Figure 4. The magnesium extracted by the precipitator vessel 40 is thereby utilized for a later use for precipitation of struvite.

In each batch of initial liquid of waste material, as discussed in connection with Figures 3 and 4, there is a specific ratio between nitrogen and phosphorus. In most cases, the concentration of nitrogen, typically in the form of ammonium ions, is larger than the concentration of phosphorus. This means that in order to precipitate all ammonium in the form of struvite, not only magnesium but also phosphorus have to be provided to the initial liquid of waste material. However, the mole ratio Mg/P has to be larger than unity in order to be able to also precipitate the phosphorus being present originally in the initial liquid of waste material. It is therefore preferable to control the Mg/P ratio in the magnesium source depending on the measured or assumed N/P ratio in the initial liquid of waste material. Ideally, the Mg/P atomic ratio in the magnesium source should be selected to be approximately equal to *q*/(*q* - 1), where q is the N/P atomic ratio.

In one embodiment, a first part of the precipitated magnesium compounds from the precipitator 40 is used for producing di-magnesium phosphate in the di-magnesium phosphate reactor 63, while a remaining, second, part is provided in a form not comprising any phosphate. By selecting the part amounts and mixing these compounds, a ratio of Mg/P can be controlled, and is thus a perfect candidate for a magnesium source to precipitate struvite from an initial liquid of waste material, as discussed above. The phosphoric acid not used for producing di-magnesium phosphate is removed from the system and corresponds to an average phosphorus content of the initial liquid of waste material.

In a further preferred embodiment, the gas output 66 of the di-magnesium phosphate reactor 63 is connected to the input 44 for pH regulating substances 45 of the precipitator vessel 40 for enabling use of at least a part of the gaseous carbon dioxide 69 emitted in the di-magnesium phosphate reactor 63 in the precipitator vessel 40.

As mentioned above, ammonium sulphate is a valuable fertilizer substance that by advantage can be used directly in the fields. However, it is preferably used in a crystalline form, which is easier to handle and distribute as well as occupying smaller volumes. Therefore, in a preferred embodiment, as illustrated in Figure 10, a method for decomposing struvite comprises the further step S90 of dehydrating the solution comprising ammonium sulphate, causing crystallization of ammonium sulphate.

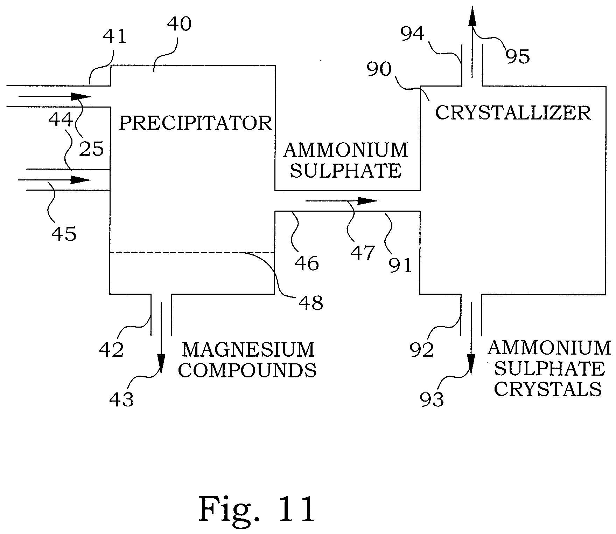

Figure 11 illustrates an embodiment of a part of a corresponding arrangement. The precipitator vessel 40 is connected by its output 46 for the solution comprising ammonium sulphate 47 to an inlet 91 of a crystallizer 90. The crystallizer 90 is configured for dehydrating the solution comprising ammonium sulphate, causing crystallization of ammonium sulphate. The crystallizer thereby has an output 94 for water and an output 92 for crystallized ammonium sulphate 93.

As mentioned above, the liquid-liquid extraction of phosphate ions was found not to be perfectly complete. It thus means that in the solution leaving the liquid-liquid extraction, a minor concentration of phosphate ions may still be present. This minor amount of phosphate ions will typically be precipitated together with the magnesium in a later stage e.g. as struvite, i.e. the phosphate is combined with the added ammonia and forms struvite. This means that the process is back to the original compound, which makes the process less efficient, particularly if the precipitated magnesium compounds are intended to be used as magnesium source for precipitating struvite.

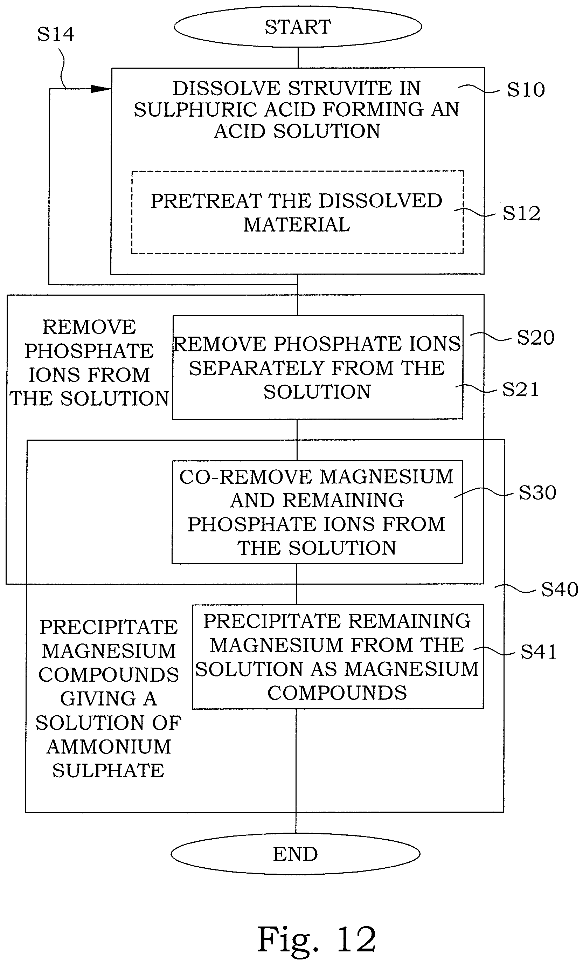

Therefore, in one embodiment, a further step of co-removing of magnesium and remaining phosphate ions from the solution is introduced. Figure 12 illustrates a flow diagram of steps of an embodiment of such a method. The step S20 of removing phosphate ions from the solution comprises, as have been described before, the step S21, where phosphate ions are removed separately from the solution. In a new step S30, a co-removing of magnesium and remaining phosphate ions from the solution is performed.

In other words, in one embodiment, the step S30 of co-removing magnesium and remaining phosphorous from said solution is performed as a part of the step S20 of removing phosphate ions from the solution after the step S21 of removing at least a part of the phosphate ions from the solution separately from other cations.

The solution exiting from the liquid-liquid extraction has typically an acid character. By increasing the pH somewhat, typically by adding ammonia, precipitation of compounds like struvite can be obtained. Experiments have shown that already at a pH of 6.1, essentially all phosphate has precipitated. The precipitated compounds can easily be filtered away.

In other words, in one embodiment, the step S30 of co-removing of magnesium and remaining phosphate ions from the solution comprises increasing of a pH of the solution. Preferably, the increasing a pH of the solution is performed by adding ammonia.

In a further embodiment, the step S30 of co-removing of magnesium and remaining phosphate ions from the solution comprises co-precipitation of magnesium and remaining phosphate ions and filtering of the co-precipitated magnesium and remaining phosphate ions

This minor amount of precipitated compounds comprising phosphorus can then be re-cycled directly to the dissolving of struvite in a subsequent process, leaving the main part of the magnesium in the solution for separate separation.

In other words, in one embodiment, the method for decomposing struvite comprises the further step of providing at least a part of the co-precipitated magnesium and remaining phosphate ions as a part of the feed material for a subsequent dissolving step.

As seen from Figure 12, step S30 can also be considered as a first part step of the step S40 of precipitating magnesium compounds. Step S41 will then follow after step S30, taking care of the remaining parts of the magnesium content.

In other words, in one embodiment, the step S30 of co-removing magnesium and remaining phosphorous from the solution is performed as a part of the step S40 of precipitating magnesium compounds from the solution, whereby precipitating S41 of remaining magnesium from the solution as magnesium compounds is performed after the step S30 of co-removing magnesium and remaining phosphorous.

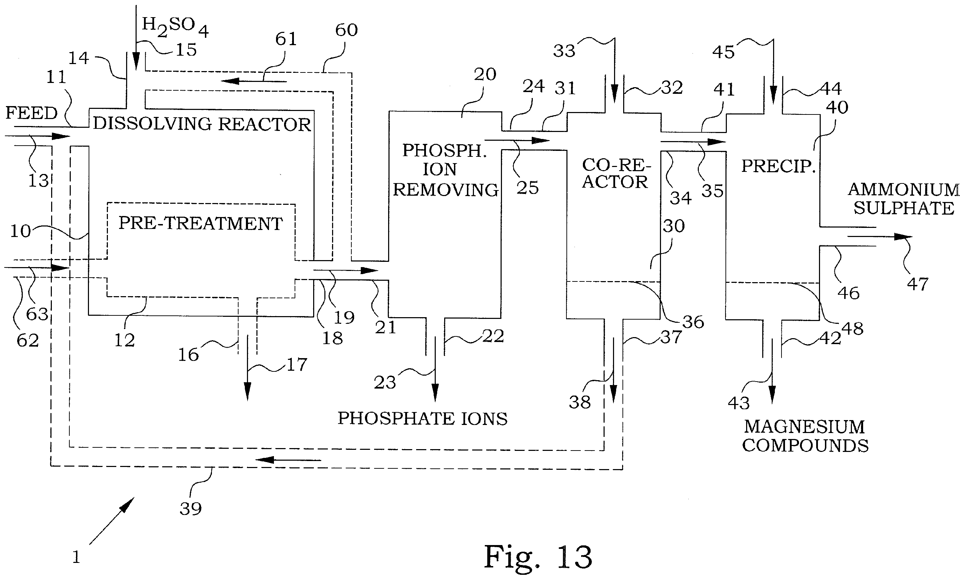

Figure 13 illustrates schematically a corresponding embodiment of an arrangement for decomposing struvite. The arrangement 1 comprises a co-reactor 30, configured for co-removing of magnesium and remaining phosphate ions from the solution. The co-reactor 30 has an input 31 for the solution comprising magnesium and remaining phosphate ions. The input 31 is connected to the output 24 for the solution 25 after phosphate ion extraction of the phosphate ion removing section 20. The co-reactor 30 has an output 34 for the solution 35 free from phosphate ion. This output 34 is connected to the input 41 for the solution of the precipitator vessel 40.

Ion one embodiment, the co-reactor 30 is configured for co-precipitation of magnesium and remaining phosphate ions. The co-reactor 30 then comprises an input 32 for precipitation precursor substances 33, a filter 36 for filtering of the co-precipitated magnesium and remaining phosphate ions, and an output 37 for the co-precipitated magnesium and remaining phosphate ions 38.

In one embodiment, the output 37 for the co-precipitated magnesium and remaining phosphate ions 38 is connected to the feed input 11 of the dissolving reactor 10, for enabling provision of at least a part of the co-precipitated magnesium and remaining phosphate ions 38 as a part of the feed material 13 for a subsequent struvite dissolving.

In one embodiment, the co-reactor 30 is configured for increasing a pH of the solution. In a further embodiment, the input 32 for precipitation precursor substances of the co-reactor 30 is configured for adding ammonia.

The embodiments described above are to be understood as a few illustrative examples of the present invention. It will be understood by those skilled in the art that various modifications, combinations and changes may be made to the embodiments without departing from the scope of the present invention. In particular, different part solutions in the different embodiments can be combined in other configurations, where technically possible. The scope of the present invention is, however, defined by the appended claims.

### REFERENCES

Haiming Huang, Lingyun Huang, Qingrui Zhang, Yang Jiang, Li Ding, 2015. Chlorination decomposition of struvite and recycling of its product for the removal of ammonium-nitrogen from landfill leachate. Chemosphere 136, 289-296.
Haiming Huang, Jiahui Liu, Jing Xiao, Peng Zhang, and Faming Gao, 2016. Highly Efficient Recovery of Ammonium Nitrogen from Coking Wastewater by Coupling Struvite Precipitation and Microwave Radiation Technology ACS Sustainable Chem. Eng., 4 (7), pp 3688-3696.
Li X.Z., Zhao Q.L., Hao X.D., Ammonium removal from landfill leachate by chemical precipitation, Waste Management, Volume 19, Issue 6, 1999, Pages 409-415.
Moerman W., Carballa M., Vandekerckhove A., Derycke D., Verstraete W. 2009. Phosphate removal in agro-industry: Pilot- and full-scale operational considerations of struvite crystallization. Water Research, Vol 43, 7, 1887-1892.
Siles J.A., Brekelmans J., Martin M.A., Chica A.F., Martin A., 2010. Impact of ammonia and sulphate concentration on thermophilic anaerobic digestion. Bioresource Technology, Vol 101, 23, 9040-9048.
Stefanowicz, T., Napieralska-Zagozda, S., Osinska, M., Samsonowska, K., 1992. Ammonium removal from waste solutions by precipitation of MgNH4PO4 II. Ammonium removal and recovery with recycling of regenerate. Resour. Conserv. Recycl. 6, 339-345.
Sugiyama, S., Yokoyama, M., Ishizuka, H., Sotowa, K.I., Tomida, T., Shigemoto, N., 2005. Removal of aqueous ammonium with magnesium phosphates obtained from the ammonium-elimination of magnesium ammonium phosphate.
Wang, X. Marota-Valer, M.M., 2011. Integration of CO2 Capture and Mineral Carbonation by Using Recyclable Ammonium Salts.
Wilson, C.W., 2013. Ammonia recovery from municipal wastewater through a struvite formation-thermal decomposition cycle. M.A.Sc. Thesis, Department of Civil Engineering, The University of British Columbia, Vancouver, BC.
Ying Hao, Sanjay Kumar, Jung Hoon Kwag, Jae Hwan Kim, Jeong Dae Kim, and Chang Six Ra, 2011. Recycle of electrolytically dissolved struvite as an alternative to enhance phosphate and nitrogen recovery from swine wastewater. Journal of Hazardous Materials 195, 175-181
Zhang, S., Yao, C., Feng, X., Yang, M., 2004. Repeated use of MgNH4PO4·6H2O residues for ammonium removal by acid dipping. Desalination 170, 27-32.
Zhang, T., Ding, L., Ren, H., Xiong, X., 2009. Ammonium nitrogen removal from coking wastewater by chemical precipitation recycle technology. Water Res. 43, 5209-5215.

## Claims

1. A method for decomposing struvite, comprising the steps of:
- dissolving (S10) a feed material (13) comprising struvite in sulphuric acid (15), forming a solution;
- removing (S20) phosphate ions from said solution;
- precipitating (S40) magnesium compounds from said solution, after said step of removing (S20) phosphate ions, by increasing a pH of said solution, forming a solution comprising ammonium sulphate (47).

2. The method according to claim 1, **characterised in that** said step of precipitating (S40) magnesium compounds comprises the steps of:
- adding (S42) of at least one of:
carbon dioxide and ammonia,
ammonium carbonate, and
ammonium bicarbonate;
in an amount neutralizing said solution and causing precipitation of magnesium carbonate; and
- filtering (S43) said precipitated magnesium carbonate from said neutralized solution.

3. The method according to claim 2, **characterised in that** said step of precipitating (S40) magnesium compounds further comprises the step of heating said solution.

4. The method according to any of the claims 1 to 3, **characterised in that** said step of removing (S20) phosphate ions from said solution comprises the step of removing (S21) at least a part of said phosphate ions from said solution separately from cations.

5. The method according to claim 4, **characterised in that** said step of removing (S21) at least a part of said phosphate ions from the solution separately from cations comprises the step of:
- performing (S22) a liquid-liquid extraction by contacting said solution with an organic solvent (75), whereby said organic solvent becomes loaded with phosphate ions (76).

6. The method according to claim 5, **characterised in that** said step of removing (S21) at least a part of said phosphate ions from the solution separately from cations further comprises:
- stripping (S23) said organic solvent loaded with phosphate ions (76) with water; forming a phosphoric acid solution.

7. The method according to claim 6, **characterised by** further comprising:
- reacting (S60) said solution of phosphoric acid with magnesium carbonate, forming di-magnesium phosphate and gaseous carbon dioxide.

8. The method according to any of the claims 1 to 7, **characterised by** the further step of co-removing (S30) of magnesium and remaining phosphate ions from said solution.

9. The method according to claim 8 when being dependent on claim 4, **characterised in that** said step of co-removing (S30) magnesium and remaining phosphorous from said solution is performed as a part of said step of removing (S20) phosphate ions from said solution after said step of removing (S21) at least a part of said phosphate ions from said solution separately from cations.

10. The method according to claim 8, **characterised in that** said step of co-removing (S30) magnesium and remaining phosphorous from said solution is performed as a part of said step of precipitating (S40) magnesium compounds from said solution, whereby precipitating (S41) of remaining magnesium from said solution as magnesium compounds is performed after said step of co-removing (S30) magnesium and remaining phosphate ions.

11. The method according to any of the claims 8 to 10, **characterised in that** said step of co-removing (S30) of magnesium and remaining phosphate ions from said solution comprises co-precipitation of magnesium and remaining phosphate ions and filtering of said co-precipitated magnesium and remaining phosphate ions.

12. The method according to claim 11, **characterised in that** said step of co-removing (S30) of magnesium and remaining phosphate ions from said solution comprises increasing a pH of said solution, whereby said increasing a pH of said solution is performed by adding ammonia.

13. A method for recovering at least one of nitrogen, phosphorus and potassium from waste material, comprising the steps of:
- precipitating (S1) struvite from an initial liquid of waste material (135), by adding a magnesium source (136) to said initial liquid of waste material (135) and adjusting a pH of said initial liquid of waste material (135) to an alkaline pH;
- separating (S2) said precipitated struvite (100) from said initial liquid of waste material (135);
- decomposing (S3) said separated struvite (100) by a method according to any of the claims 1 to 12.

14. An arrangement (1) for decomposing struvite, comprising:
- a dissolving reactor (10), configured for mixing struvite and sulphuric acid for causing dissolution of said struvite;
wherein said dissolving reactor (10) having a feed input (11) for entering feed material (13) comprising struvite, an acid input (14) for entering sulphuric acid (15), and an output (18) for a solution comprising dissolved struvite (19);
- a phosphate ion removing section (20), configured for extracting phosphate ions from said solution;
wherein said phosphate ion removing section (20) having an input (21) for entering said solution comprising dissolved struvite (19), connected to said output (18) for a solution comprising dissolved struvite (19) of said dissolving reactor (10), an output (22) for a liquid comprising extracted phosphate ions (23), and an output (24) for said solution after phosphate ion extraction (25); and
- a precipitator vessel (40), configured for precipitating magnesium compounds from said solution by increasing a pH of said solution; and
said precipitator vessel (40) having a separation arrangement (48) for separating said precipitated magnesium compounds (43) from said solution;
wherein said precipitator vessel (40) has an input (41) for said solution, directly or indirectly connected to said output (24) for said solution after phosphate ion extraction (25) of said phosphate ion removing section (20), an input (44) for pH regulating substances (45), an output (42) for said precipitated magnesium compounds (43) and an output (46) for a solution comprising ammonium sulphate (47); and
- a crystallizer (90), configured for dehydrating said solution comprising ammonium sulphate (47), causing crystallization of ammonium sulphate (93);
wherein said crystallizer (90) has an input (91) for said solution comprising ammonium sulphate (47) connected to said output (46) for said solution comprising ammonium sulphate (47) of said precipitator vessel (40), and an output (92) for crystallized ammonium sulphate (93).

15. An arrangement (9) for recovering at least one of nitrogen, phosphorus and potassium from waste material, comprising:
- a struvite precipitator (2);
said struvite precipitator (2) having an input (3) for an initial liquid of waste material (135), and an input (5) for magnesium compounds (136);
said struvite precipitator (2) being arranged for mixing said initial liquid of waste material (135) and said magnesium compounds (136), and for adjusting a pH of said initial liquid of waste material to an alkaline pH, whereby struvite (100) precipitates;
said struvite precipitator (2) comprising a separator (7), arranged for separating said precipitated struvite from said initial liquid of waste material (135), and an output (6) for said precipitated struvite (100); and
- an arrangement (1) for decomposing struvite (100) according to claim 14;
wherein said feed input (11) of said dissolving reactor (10) is connected to said output (6) for said precipitated struvite (100) of said struvite precipitator (2).

## Patentansprüche

1. Verfahren zum Zersetzen von Struvit, umfassend die Schritte:
- Lösen (S10) eines Eintragsmaterials (13), welches Struvit enthält, in Schwefelsäure (15) zum Bilden einer Lösung;
- Entfernen (S20) von Phosphationen aus der Lösung;
- nach dem Schritt des Entfernens (S20) von Phosphationen, Abscheiden (S40) von Magnesiumverbindungen aus der Lösung durch Erhöhen eines pH-Werts der Lösung, wodurch sich eine Lösung bildet, welche Ammoniumsulfat (47) enthält.

2. Verfahren nach Anspruch 1, **dadurch gekennzeichnet, dass** der Schritt des Abscheidens (S40) von Magnesiumverbindungen die folgenden Schritte umfasst:
- Hinzufügen (S42) mindestens einer der Verbindungen aus der Gruppe umfassend:
Kohlendioxid und Ammoniak,
Ammoniumkarbonat, und
Ammoniumbikarbonat;
in einer Menge, welche die Lösung neutralisiert und das Abscheiden von Magnesiumkarbonat bewirkt; und
- Filtern (S43) des abgeschiedenen Magnesiumkarbonats aus der neutralisierten Lösung.

3. Verfahren nach Anspruch 2, **dadurch gekennzeichnet, dass** der Schritt des Abscheidens (S40) von Magnesiumverbindungen ferner den Schritt des Erhitzens der Lösung umfasst.

4. Verfahren nach einem der Ansprüche 1 bis 3, **dadurch gekennzeichnet, dass** der Schritt des Entfernens (S20) von Phosphationen aus der Lösung den Schritt des Entfernens (S21) mindestens eines Teils der Phosphationen aus der Lösung getrennt von Kationen umfasst.

5. Verfahren nach Anspruch 4, **dadurch gekennzeichnet, dass** der Schritt des Entfernens (S21) mindestens eines Teils der Phosphationen aus der Lösung getrennt von Kationen den folgenden Schritt umfasst:
- Ausführen (S22) einer Flüssig-Flüssig-Extraktion durch In-Kontakt-Bringen der Lösung mit einem organischen Lösungsmittel (75), wobei das organische Lösungsmittel mit Phosphationen (76) beladen wird.

6. Verfahren nach Anspruch 5, **dadurch gekennzeichnet, dass** der Schritt des Entfernens (S21) mindestens eines Teils der Phosphationen aus der Lösung getrennt von Kationen ferner umfasst:
- Abziehen (S23) des mit Phosphationen (76) beladenen organischen Lösungsmittels mit Wasser; wodurch sich eine Phosphorsäure bildet.

7. Verfahren nach Anspruch 6, **dadurch gekennzeichnet, dass** es ferner umfasst:
- Umsetzen (S60) der Phosphorsäurelösung mit Magnesiumkarbonat, wodurch sich Di-Magnesiumphosphat und gasförmiges Kohlendioxid bildet.

8. Verfahren nach einem der Ansprüche 1 bis 7, **gekennzeichnet durch** den zusätzlichen Schritt des gemeinsamen Entfernens (S30) von Magnesium und verbleibenden Phosphationen aus der Lösung.

9. Verfahren nach Anspruch 8 in Abhängigkeit von Anspruch 4, **dadurch gekennzeichnet, dass** der Schritt des gemeinsamen Entfernens (S30) von Magnesium und verbleibendem Phosphor aus der Lösung als ein Teil des Schritts des Entfernens (S20) von Phosphationen aus der Lösung nach dem Schritt des Entfernens (S21) mindestens eines Teils der Phosphationen aus der Lösung getrennt von Kationen vorgenommen wird.

10. Verfahren nach Anspruch 8, **dadurch gekennzeichnet, dass** der Schritt des gemeinsamen Entfernens (S30) von Magnesium und verbleibendem Phosphor aus der Lösung als ein Teil des Schritts des Abscheidens (S40) von Magnesiumverbindungen aus der Lösung vorgenommen wird, wodurch das Abscheiden (S41) verbleibenden Magnesiums aus der Lösung als Magnesiumverbindungen nach dem Schritt des gemeinsamen Entfernens (S30) von Magnesium und verbleibenden Phosphationen erfolgt.

11. Verfahren nach einem der Ansprüche 8 bis 10, **dadurch gekennzeichnet, dass** der Schritt des gemeinsamen Entfernens (S30) von Magnesium und verbleibenden Phosphationen aus der Lösung das gemeinsame Abscheiden von Magnesium und verbleibenden Phosphationen und das Filtern von Magnesium und verbleibenden Phosphationen, welche gemeinsam abgeschieden werden, umfasst.

12. Verfahren nach Anspruch 11, **dadurch gekennzeichnet, dass** der Schritt des gemeinsamen Entfernens (S30) von Magnesium und verbleibenden Phosphationen aus der Lösung das Erhöhen eines pH-Werts der Lösung umfasst, wobei das Erhöhen eines pH-Werts der Lösung durch Hinzufügen von Ammoniak erfolgt.

13. Verfahren zum Rückgewinnen mindestens einer der Substanzen aus der Gruppe umfassend Stickstoff, Phosphor und Kalium aus Abfallmaterial, umfassend die Schritte:
- Abscheiden (S1) von Struvit aus einer Abfallmaterialausgangsflüssigkeit (135) durch Hinzufügen einer Magnesiumquelle (136) zur Abfallmaterialausgangsflüssigkeit (135) und Einstellen eines pH-Werts der Abfallmaterialausgangsflüssigkeit (135) auf einen alkalischen pH-Wert;
- Abtrennen (S2) des abgeschiedenen Struvits (100) von der Abfallmaterialausgangsflüssigkeit (135);
- Zersetzen (S3) des abgetrennten Struvits (100) durch ein Verfahren nach einem der Ansprüche 1 bis 12.

14. Anordnung (1) zum Zersetzen von Struvit, aufweisend:
- einen Lösungsreaktor (10), welcher dafür eingerichtet ist, Struvit und Schwefelsäure zu vermengen, um das Lösen des Struvits zu bewirken;
wobei der Lösungsreaktor (10) einen Eintragseinlass (11) zum Zuführen von Eintragsmaterial (13), welches Struvit enthält, einen Säureeinlass (14) zum Zuführen von Schwefelsäure (15), und einen Auslass (18) für eine Lösung (19), welche gelöstes Struvit enthält, aufweist;
- einen Phosphationenentfernungsabschnitt (20), welcher dafür eingerichtet ist, Phosphationen aus der Lösung zu entnehmen;
wobei der Phosphationenentfernungsabschnitt (20) einen Einlass (21), welcher mit dem Auslass (18) des Lösungsreaktors (10) für eine Lösung (19), welche gelöstes Struvit enthält, verbunden ist, zum Zuführen der Lösung (19), welche gelöstes Struvit enthält, einen Auslass (22) für eine Flüssigkeit (23), welche entnommene Phosphationen enthält, und einen Auslass (24) für die Lösung (25) nach der Entnahme von Phosphationen aufweist; und
- einen Abscheidebehälter (40), welcher dafür eingerichtet ist, Magnesiumverbindungen aus der Lösung abzuscheiden, indem ein pH-Wert der Lösung erhöht wird; und
wobei der Abscheidebehälter (40) eine Trennungsanordnung (48) zum Trennen der abgeschiedenen Magnesiumverbindungen (43) aus der Lösung aufweist;
wobei der Abscheidebehälter (40) einen Einlass (41), welcher direkt oder indirekt mit dem Auslass (24) des Phosphationenentfernungsabschnitts (20) für die Lösung nach der Entnahme von Phosphationen (25) verbunden ist, für die Lösung, einen Einlass (44) für pH-regulierende Substanzen (45), einen Auslass (42) für die abgeschiedenen Magnesiumverbindungen (43) und einen Auslass (46) für eine Lösung, welche Ammoniumsulfat (47) enthält, aufweist; und
- ein Kristallisationsgefäß (90), welches dafür eingerichtet ist, die Lösung (47), welche Ammoniumsulfat (47) enthält, zu entwässern, um die Kristallisation von Ammoniumsulfat (93) zu bewirken;
wobei das Kristallisationsgefäß (90) einen Einlass (91), welcher mit dem Auslass (46) des Abscheidebehälters (40) für die Lösung (47), welche Ammoniumsulfat enthält, verbunden ist, für die Lösung (47), welche Ammoniumsulfat enthält, und einen Auslass (92) für kristallisiertes Ammoniumsulfat (93) aufweist.

15. Anordnung (9) zum Rückgewinnen mindestens einer der Substanzen aus der Gruppe umfassend Stickstoff, Phosphor und Kalium aus Abfallmaterial, aufweisend:
- einen Struvitabscheider (2);
wobei der Struvitabscheider (2) einen Einlass (3) für eine Abfallmaterialausgangsflüssigkeit (135) und einen Einlass (5) für Magnesiumverbindungen (136) aufweist;
der Struvitabscheider (2) dafür eingerichtet ist, die Abfallmaterialausgangsflüssigkeit (135) und die Magnesiumverbindungen (136) zu vermengen und einen pH-Wert der Abfallmaterialausgangsflüssigkeit auf einen alkalischen pH-Wert einzustellen, wodurch Struvit (100) abgeschieden wird; und
der Struvitabscheider (2) eine Trenneinrichtung (7), welche dafür eingerichtet ist, das abgeschiedene Struvit von der Abfallmaterialausgangsflüssigkeit (135) zu trennen, und einen Auslass (6) für das abgeschiedene Struvit (100) aufweist; und
- eine Anordnung (1) zum Zersetzen von Struvit (100) nach Anspruch 14;
wobei der Eintragseinlass (11) des Lösungsreaktors (10) mit dem Auslass (6) des Struvitabscheiders (2) für das abgeschiedene Struvit (100) verbunden ist.

## Revendications

1. Procédé de décomposition de struvite, comprenant les étapes de :
- dissolution (S10) d'une matière première (13) comprenant de la struvite dans de l'acide sulfurique (15) en formant une solution ;
- élimination (S20) des ions de phosphate de ladite solution ;
- précipitation (S40) de composés de magnésium de ladite solution, après ladite étape d'élimination des ions de phosphate (S20), en augmentant un pH de ladite solution en formant une solution comprenant du sulfate d'ammonium (47).

2. Procédé selon la revendication 1, **caractérisé en ce que** ladite étape de précipitation (S40) de composés de magnésium comprend les étapes :
- d'ajout (S42) d'au moins un élément parmi :
le dioxyde de carbone et l'ammoniaque,
le carbonate d'ammonium ; et
le bicarbonate d'ammonium ;
en une quantité neutralisant ladite solution et provoquant la précipitation de carbonate de magnésium ; et
- de filtration (S43) dudit carbonate de magnésium précipité de ladite solution neutralisée.

3. Procédé selon la revendication 2, **caractérisé en ce que** ladite étape de précipitation (S40) de composés de magnésium comprend en outre l'étape de chauffage de ladite solution.

4. Procédé selon l'une quelconque des revendications 1 à 3, **caractérisé en ce que** ladite étape d'élimination (S20) des ions de phosphate de ladite solution comprend l'étape d'élimination (S21) d'au moins une partie desdits ions de phosphate de ladite solution séparément des cations.

5. Procédé selon la revendication 4, **caractérisé en ce que** ladite étape d'élimination (S21) d'au moins une partie desdits ions de phosphate de la solution séparément des cations comprend l'étape de :
- réalisation (S22) d'une extraction liquide-liquide en mettant ladite solution en contact avec un solvant organique (75), ledit solvant organique se chargeant ainsi en ions de phosphate (76).

6. Procédé selon la revendication 5, **caractérisé en ce que** ladite étape d'élimination (S21) d'au moins une partie desdits ions de phosphate de ladite solution séparément des cations comprend en outre :
- le décapage (S23) dudit solvant organique chargé en ions de phosphate (76) avec de l'eau en formant une solution d'acide phosphorique.

7. Procédé selon la revendication 6, **caractérisé en ce que caractérisé en ce que** qu'il comprend en outre :
- la réaction (S60) de ladite solution d'acide phosphorique avec du carbonate de magnésium en formant du phosphate d'hydrogène de magnésium et du dioxyde de carbone gazeux.

8. Procédé selon l'une quelconque des revendications 1 à 7, **caractérisé par** l'étape supplémentaire de retrait conjoint (S30) du magnésium et des ions de phosphate restants de ladite solution.

9. Procédé selon la revendication 8 lorsqu'on est dépendant de la revendication 4, **caractérisé en ce que** l'étape de retrait conjoint (S30) du magnésium et du phosphore restant de ladite solution est réalisée sous forme d'une partie de ladite étape d'élimination (S20) des ions de phosphate de ladite solution après ladite étape d'élimination (S21) d'au moins une partie desdits ions de phosphate de ladite solution séparément des cations.

10. Procédé selon la revendication 8, **caractérisé en ce que** l'étape de retrait conjoint (S30) du magnésium et du phosphore restant de ladite solution est réalisée sous forme d'une partie de ladite étape de précipitation (S40) des composés de magnésium de ladite solution, la précipitation (S41) du reste du magnésium de ladite solution sous forme de composés de magnésium étant réalisée après ladite étape de retrait conjoint (S30) du magnésium et des ions de phosphate restants.

11. Procédé selon l'une quelconque des revendications 8 à 10, **caractérisé en ce que** ladite étape de retrait conjoint (S30) du magnésium et des ions de phosphate restants comprend la précipitation conjointe du magnésium et des ions de phosphate restants et la filtration desdits ions de magnésium et ions de phosphate restants précipités conjointement.

12. Procédé selon la revendication 11, **caractérisé en ce que** ladite étape de retrait conjoint (S30) du magnésium et des ions de phosphate restants comprend l'augmentation d'un pH de ladite solution, ladite augmentation d'un pH de ladite solution étant réalisée en ajoutant de l'ammoniaque.

13. Procédé de récupération d'au moins un élément parmi l'azote, le phosphore et le potassium dans des déchets, comprenant les étapes de :
- précipitation (S1) de struvite d'un déchet liquide initial (135) en ajoutant une source de magnésium (136) audit déchet liquide initial (135) et en réglant un pH dudit déchet liquide initial (135) pour obtenir un pH alcalin ;
- séparation (S2) de ladite struvite précipitée (100) dudit déchet liquide initial (135) ;
- décomposition (S3) de ladite struvite séparée (100) par un procédé selon l'une quelconque des revendications 1 à 12.

14. Dispositif (1) pour la décomposition de struvite, comprenant :
- un réacteur de dissolution (10) configuré pour mélanger la struvite et de l'acide sulfurique pour provoquer la dissolution de ladite struvite ;
ledit réacteur de dissolution (10) ayant une entrée d'alimentation (11) pour faire entrer de la matière première (13) comprenant de la struvite, une entrée d'acide (14) pour faire entrer de l'acide sulfurique (15), et une sortie (18) pour une solution comprenant de la struvite dissoute (19);
- une section d'élimination des ions de phosphate (20) configurée pour extraire des ions de phosphate de ladite solution ;
ladite section d'élimination des ions de phosphate (20) ayant une entrée (21) pour faire entrer ladite solution comprenant de la struvite dissoute (19), connectée à ladite sortie (18) pour une solution comprenant de la struvite dissoute (19) dudit réacteur de dissolution (10), une sortie (22) pour un liquide comprenant des ions de phosphate extraits (23), et une sortie (24) pour ladite solution après l'extraction des ions de phosphate (25) ; et
- une cuve de précipitation (40) configurée pour précipiter des composés de magnésium de ladite solution en augmentant un pH de ladite solution ; et
ladite cuve précipitation (40) comportant un dispositif de séparation (48) pour séparer lesdits composés de magnésium précipités (43) de ladite solution ;
ladite cuve de précipitation (40) comportant une entrée (41) pour ladite solution, directement ou indirectement connectée à ladite sortie (24) pour ladite solution après l'extraction des ions de phosphate (25) de ladite section d'élimination des ions de phosphate (20), une entrée (44) pour des substances régulant le pH (45), une sortie (42) pour lesdits composants de magnésium précipités (43) et une sortie (46) pour une solution comprenant du sulfate d'ammonium (47) ; et
- un cristalliseur (90) configuré pour déshydrater ladite solution comprenant du sulfate d'ammonium (47), en provoquant la cristallisation du sulfate d'ammonium (93) ;
ledit cristalliseur (90) ayant une entrée (91) pour ladite solution comprenant du sulfate d'ammonium (47) connectée à ladite sortie (46) pour ladite solution comprenant du sulfate d'ammonium (47) de ladite cuve de précipitation (40), et une sortie (92) pour le sulfate d'ammonium cristallisé (93).

15. Dispositif (9) de récupération d'au moins un élément parmi l'azote, le phosphore et le potassium de déchets, comprenant :
- un précipitateur de struvite (2) ;
ledit précipitateur de struvite (2) ayant une entrée (3) pour un déchet liquide initial (135) et une entrée (5) pour des composés de magnésium (136) ;
ledit précipitateur de struvite (2) étant conçu pour mélanger ledit déchet liquide initial (135) et lesdits composés de magnésium (136), et pour régler un pH dudit déchet liquide initial pour obtenir pH alcalin, ladite struvite (100) précipitant ;
ledit précipitateur de struvite (2) comprenant un séparateur (7) conçu pour séparer ladite struvite précipitée dudit déchet liquide initial (135), et une sortie (6) pour ladite struvite précipitée (100) ; et
- un dispositif (1) pour décomposer la struvite (100) selon la revendication 14 ;
ladite entrée d'alimentation (11) dudit réacteur de dissolution (10) étant connectée à ladite sortie (6) de ladite struvite précipitée (100) dudit précipitateur de struvite (2).
